(19)

Europäisches
Patentamt
European
Patent Office
Office européen
des brevets

(11) **EP 4 538 932 A1**

(12) **EUROPEAN PATENT APPLICATION**

(43) Date of publication:
**16.04.2025 Bulletin 2025/16**

(21) Application number: **24205521.8**

(22) Date of filing: **09.10.2024**

(51) International Patent Classification (IPC):
**G06N 3/0464** (2023.01)   **G06N 3/084** (2023.01)
**G06N 3/0895** (2023.01)   **G06N 3/09** (2023.01)
**G06N 20/10** (2019.01)

(52) Cooperative Patent Classification (CPC):
**G06N 3/0895; G06N 3/0464; G06N 3/084;
G06N 3/09; G06N 20/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.10.2023 US 202363543173 P**

(71) Applicant: **Flatiron Health, Inc.
New York, NY 10013 (US)**

(72) Inventors:
• **Kiyasseh, Dani
New York, 10013 (US)**
• **Cohen, Aaron
New York, 10013 (US)**
• **Jiang, Chengsheng
New York, 10013 (US)**
• **Altieri, Nicholas
New York, 10013 (US)**

(74) Representative: **Mewburn Ellis LLP
Aurora Building
Counterslip
Bristol BS1 6BX (GB)**

(54) **TECHNIQUES FOR EVALUATING ARTIFICIAL INTELLIGENCE SYSTEMS WITHOUT GROUND-TRUTH ANNOTATIONS**

(57)    Disclosed systems and methods provide a framework for evaluating AI systems without ground-truth annotations. The disclosed embodiments may assign temporary labels to data points in sets of working data and use the temporarily labeled data to train one or more distinct models. These models may be evaluated to determine which has the highest performance and is thus indicative of the temporary labels most likely to be correct.

FIG. 1

**Description**

RELATED APPLICATIONS

This Application claims priority under 35 USC 119(e) as a Non-Provisional of Provisional U.S. Application Serial No. 63/543,173, filed October 9, 2023, entitled "FRAMEWORK FOR EVALUATING ARTIFICIAL INTELLIGENCE SYSTEMS", which application is hereby incorporated by reference in its entirety.

FIELD

Described herein are techniques of evaluating the performance of an artificial intelligence (AI) system when deployed to perform a task on a dataset without having ground-truth labels for the dataset. The techniques may be used, for example, to optimize an AI system design for a task.

BACKGROUND

In today's healthcare environment, artificial intelligence (AI) systems are increasingly used to evaluate patient data. For example, this may include selecting patients for cohorts, and identifying patients with a particular attribute (e.g., diagnosed with prostate cancer, etc.). Such AI systems may allow for processing vast quantities of patient data that would otherwise be impractical. For example, researchers who wish to perform a statistical analysis on patient genomic data often require relatively large data sets (e.g., thousands, tens of thousands, hundreds of thousands, or millions of patients, or more) in order to draw meaningful insights from the data. The sheer volume of data that a researcher would have to review makes manual extraction of relevant information infeasible.

SUMMARY

Disclosed systems and methods provide a framework for evaluating AI systems without ground-truth annotations. The disclosed embodiments may assign temporary labels to data points in sets of working data and use the temporarily labeled data to train one or more distinct models. These models may be evaluated to determine which has the highest performance and is thus indicative of the temporary labels most likely to be correct.

Some embodiments may be used to select AI systems to provide more accurate systems that contribute to improved downstream applications (e.g., patient care). Some embodiments may be used to assess algorithmic bias, which was not previously possible for data without ground-truth labels. This ensures that AI systems perform as expected when deployed on data in the wild. Some embodiments may be used to assess algorithmic bias across multiple groups.

The process may include inputting the working set of patient data into a first trained machine learning model. The first trained machine learning model may have been trained using a first training set of patient data. Consistent with the disclosed embodiments, the first trained machine learning model may be trained using data other than the working patient data. In other words, the first training set of patient data and the working set of patient data may be different. In some embodiments, the first training set of patient data may be labeled to indicate whether patients are included in the class.

The process may include receiving an output of the first trained machine learning model. This output may indicate probabilities of whether each of the plurality of patients belongs to a class. For example, the class may represent whether or not a patient has a certain attribute, whether the patient is eligible for a cohort, or the like.

The disclosed process may further include identifying, based on the output, a subset of the plurality of patients belonging to the class. For example, this may include producing an output $p \in [0,1]$ reflecting probability of positive class for each data point (e.g., patient). In some embodiments, identifying the subset of the plurality of patients may include generating a distribution of output probabilities. This distribution may be discretized into several predefined intervals (e.g., deciles). The disclosed embodiments may include sampling data points in the working set from each interval and assigning them a temporary class label (pseudo-label). The process may further include retrieving an equal number of data points in the first training set from the opposite class (i.e., belonging to the class).

The disclosed process may include training a second trained machine learning model to distinguish between patients belonging to the class and patients not belonging to the class. The second trained machine learning model being trained using: patient data from the first training set of patient data associated with patients not belonging to the class, and patient data from the working set of patient data associated with the patients belonging to the class. Accordingly, the model may be a classifier model trained to distinguish between the newly pseudo-labelled data points (i.e., the subset of patients) and those with a ground-truth label (i.e., the patients from the opposite class).

The process may further include inputting a second training set of patient data into the second trained machine learning model. The second training set may be a hold-out set of training data and thus may be labeled to indicate whether patients are included in the class. Accordingly, the second training set of patient data is a reserved portion of the first training set of patient data.

The process may include evaluating a performance of the first trained machine learning model based on an output of the second trained machine learning model. For example, a performant classifier may provide evidence in support of the pseudo-label.

In some embodiments, multiple classifier models may be developed. Accordingly, the process may include training a third trained machine learning model to distinguish between patients belonging to the class and patients not belonging to the class and inputting the second training set of patient data into the third trained machine learning model. The third trained machine learning model being trained using: patient data from the first training set of patient data associated with patients belonging to the class, and patient data from the working patient data associated with the patients not belonging to the class. Evaluating the performance of the first trained machine learning model or the second trained machine learning model may further be based on an output of the third trained machine learning model.

Some embodiments provide a system for evaluating performance of an artificial intelligence (AI) system in performing a task on a dataset without having ground truth labels for data points in the dataset. The system comprises: memory storing parameters of a machine learning model of the AI system, the machine learning model being trained to classify a data point into one of a plurality of classes, the plurality of classes including a first class and a second class; and a computer hardware processor configured to: execute the AI system to perform the task on the dataset at least in part by processing, using the parameters of the machine learning model, data points in the dataset to obtain output probabilities that the data points belong to the first class; divide, using the output probabilities that the data points belong to the first class, the data points in the unlabeled dataset among a plurality of probability interval groups; sample one or more data points from each of at least some of the plurality of probability interval groups to obtain a first set of data points; assign a first class label to the first set of data points indicating that the first set of data points belong to the first class; sample, from the first labeled training dataset, a second set of data points labeled as belonging to the second class; train, using the labeled first set and second sets of data points, a first classification model to classify a data point into one of the first class or the second class; and determine a performance measurement of the AI system using the first classification model.

Some embodiments provide a method for evaluating performance of an artificial intelligence (AI) system in performing a task on a dataset without having ground truth labels for data points in the dataset. The method comprises using a computer hardware processor to perform: accessing, from memory, parameters of a machine learning model of the AI system, the machine learning model trained to classify a data point into one of a plurality of classes, the plurality of classes including a first class and a second class; executing the AI system to perform the task on the dataset at least in part by processing, using the parameters of the machine learning model, data points in the dataset to obtain output probabilities that the data points belong to the first class; dividing, using the output probabilities that the data points belong to the first class, the data points in the unlabeled dataset among a plurality of probability interval groups; sampling one or more data points from each of at least some of the plurality of probability interval groups to obtain a first set of data points; assigning a first class label to the first set of data points indicating that the first set of data points belong to the first class; sampling, from the first labeled training dataset, a second set of data points labeled as belonging to the second class; training, using the labeled first set and second sets of data points, a first classification model to classify a data point into one of the first class or the second class; and determining a performance measurement of the AI system using the first classification model.

Some embodiments provide a non-transitory computer-readable medium storing instructions that, when executed by a computer hardware processor, cause the computer hardware processor to perform a method for evaluating performance of an artificial intelligence (AI) system in performing a task on a dataset without having ground truth labels for data points in the dataset. The method comprises: accessing, from memory, parameters of a machine learning model of the AI system, the machine learning model trained to classify a data point into one of a plurality of classes, the plurality of classes including a first class and a second class; executing the AI system to perform the task on the dataset at least in part by processing, using the parameters of the machine learning model, data points in the dataset to obtain output probabilities that the data points belong to the first class; dividing, using the output probabilities that the data points belong to the first class, the data points in the unlabeled dataset among a plurality of probability interval groups; sampling one or more data points from each of at least some of the plurality of probability interval groups to obtain a first set of data points; assigning a first class label to the first set of data points indicating that the first set of data points belong to the first class; sampling, from the first labeled training dataset, a second set of data points labeled as belonging to the second class; training, using the labeled first set and second sets of data points, a first classification model to classify a data point into one of the first class or the second class; and determining a performance measurement of the AI system using the first classification model.

The foregoing summary is non-limiting.

BRIEF DESCRIPTION OF DRAWINGS

FIG. 1 illustrates distribution shift that may occur between a training dataset and data that an AI system processes after deployment to perform a task, according to some embodiments of the technology described herein.

FIG. 2A illustrates an AI performance evaluation system, according to some embodiments of the technology described herein.

FIG. 2B illustrates operation of the modules of the AI performance evaluation system of FIG. 2A to generate a first trained classification model to use in evaluating performance of an AI system, according to some embodiments of the technology described herein.

FIG. 2C illustrates operation of the modules of the AI performance evaluation system of FIG. 2A to generate a second trained classification model to use in evaluating performance of an AI system, according to some embodiments of the technology described herein.

FIG. 2D illustrates determination of a performance measurement of the AI system using the trained classification models of FIGs. 2B-2C.

FIGs. 3A-3B illustrate an example process for evaluating performance of an AI system according to some embodiments of the technology described herein.

FIG. 4 illustrates an example evaluation of the performance of an AI system, according to some embodiments of the technology described herein.

FIG. 5 illustrates example AI performance measurements of two AI systems trained to categorize lesions in dermatology images as benign or malignant, according to some embodiments of the technology described herein.

FIG. 6 illustrates an example AI performance measurement of an AI system trained to perform binary tumor classification based on a histopathological image, according to some embodiments of the technology described herein.

FIG. 7 illustrates identification of unreliable measurements by a trained AI systems using some embodiments of the technology described herein.

FIG. 8 illustrates an example computer system that may be specially configured to implement some embodiments of the technology described herein.

DETAILED DESCRIPTION

Described herein are techniques for evaluating performance of an AI system in performing a task on a dataset without having ground truth labels for data points in the dataset. The techniques provide a performance measurement of the AI system that does not rely on ground-truth labels. The performance measurement of the AI system can be used for various functions such as selecting a machine learning model for use by the AI system, identifying unreliable outputs (e.g., predictions) of the AI system, determining fairness of predictions, and/or updating training data used to train the AI system.

AI systems that employ trained machine learning (ML) models can be used to perform tasks (e.g., a prediction or classification task) that would be impossible or impractical using other methods. The AI systems may process large amounts of data to perform tasks that are impossible or impractical for humans to perform. In many cases, such AI systems can deliver highly accurate results (with high confidence), even for complicated edge cases. In other cases, however, trained models may return highly confident, but inaccurate results.

An AI system (e.g., a clinical AI system) may be trained using a labeled training dataset and then validated on a portion of the training dataset that was held out (a "held-out dataset") which the AI system has not been exposed to before (e.g., data from a different hospital with a distinct electronic health record system, updated medical record data about patients, data from a different geographic region, or other type of data that the AI system has not been previously exposed to). For example, a supervised learning algorithm (e.g., stochastic gradient descent) may be applied to the labeled training dataset excluding the held-out dataset. After training, the performance of the AI system may be tested on the held-out dataset to obtain a performance measurement indicating how the AI system can be expected to perform when deployed to perform a task using new data.

This evaluation process is meant to mimic the deployment of the AI system to process new data to perform a task. The new data on which the AI system is deployed to perform a task may also be referred to as "working data" or "data in the wild". However, working data that an AI system encounters after deployment often differs from the held-out dataset in a phenomenon referred to as "distribution shift." Data points in the working data may follow a distribution that is different from that of the held-out dataset. For example, an AI system trained using data from one electronic health record (EHR) system may be deployed on data from another EHR system. However, the data in the other EHR system may have a largely different makeup than the data of the EHR system used for training (e.g., due to different patient demographics, different geographic regions, and/or other factors). As another example, an AI system trained using data obtained during a past period may be deployed to perform a task using data that will be obtained in the future. Data in the future may have a different distribution than the data in the past period due to various factors.

This distribution shift may result in a trained AI system performing more poorly than expected after deployment relative to the expected performance determined using a held-out dataset. In other words, the training data used for training the AI system may not accurately represent the data that the AI system will use after deployment. The problem is further compounded by the fact that, in many cases, there are no ground-truth labels to use in determining the performance of an AI system after deployment. Thus, the lower performance of the AI system on working data may not be detectable until downstream effects of the lower performance are detected (e.g., poor treatment outcomes resulting from poor performance of a clinical AI system). The lower task performance (e.g., poor prediction or classification accuracy) results in degraded downstream operations that employ outputs of the AI system (e.g., disease diagnosis, identification of treatment, cancer detection, computer resource optimization, patient trial matching, and/or other operations). The distribution shift may also result in unreliable predictions and/or bias that may go undetected (e.g., when there are no ground-truth labels for data points in the working data).

When there are no ground-truth labels available for data points in working data, it may be difficult or impossible for a user to distinguish between accurate and inaccurate results returned by an AI system. The inventors have thus recognized a need for systems and techniques to automatically determine the performance of an AI system that does not rely on ground-truth labels. Accordingly, technical solutions are needed to evaluate AI system performance to enable more reliable decisions given the uncertainty surrounding AI predictions on working data that arise from distribution shift and lack of ground-truth labels.

Described herein are embodiments of an AI performance evaluation system and associated techniques. The system is configured to assess the performance of AI systems on working data without relying on ground-truth labels for data points. Performance measurements determined by the system may inform selection of a machine learning model for use by the AI system, detection of bias in predictions performed on data points in a working dataset, and/or identify unreliable predictions. The performance measurements may thus be used to improve the performance of an AI system in performing a task. For example, a performance measurement of an AI system may be used to modify training data, modify an ML model architecture, select an ML model, and/or modify downstream operations based on the performance measurement (e.g., by ignoring unreliable predictions indicated by the performance measurement, prompting for user input to verify/correct AI system predictions, and/or adjusting operation parameters to account for the greater uncertainty in outputs of the AI system).

The AI performance evaluation system may evaluate a given AI system by executing the AI system to perform a task on a working dataset and obtain output probabilities (e.g., for different classes) from the AI system. The AI performance evaluation system may not have access to ground truth labels for the data points in the working dataset. The AI performance evaluation system may sample data points from the working dataset based on the output probabilities to obtain a sampled dataset representing the working data. The AI performance evaluation system may assign a class label to the sampled dataset indicating that it belongs to a particular class. The assigned class label may be a temporary or pseudo-label that is not necessarily reflective of the ground-truth label for the data points in the sampled dataset. The AI performance evaluation system may use the labeled sampled dataset to train one or more classification models. The AI performance evaluation system may then determine classification performance of the classification model(s) and use the classification performance to determine a performance measurement of the AI system. The AI performance evaluation system thus quantifies AI system performance without relying on ground-truth labels.

In some embodiments, the performance evaluation techniques described herein may be used to optimize the design of an AI system. In some embodiments, the techniques may be used to determine an ML model for an AI system. The performance evaluation techniques may be used to quantify the performance of the AI system when configured with different ML models. The ML model for which the AI system is determined to have the best performance may be selected for the AI system. The AI system may then be configured to use the selected ML model and then deployed in the wild. The AI system may employ the ML model to perform a task (e.g., classifying a medical image as indicating the presence of a medical condition or absence, predicting the life expectancy of an individual using clinical data about the individual, and/or another task). In some embodiments, the performance evaluation techniques described herein may be used to configure an architecture of an AI system and/or an ML model used by the AI system. The performance of various architectural configurations (e.g., given by number of layers in a neural network, number of hidden layers in a neural network, number of activation units in each layer of a neural network, kernel/filter size in a convolutional layer of a neural network, pooling size, and/or architectural parameters) may be evaluated using the techniques. The architectural configuration with the best performance may be used by the AI system.

In some embodiments, the performance measurements obtained for a set of AI systems may be used to select a particular one of the AI systems for deployment in an environment. The selected AI system may be deployed in the environment to perform a task. For example, the selected AI system may be deployed to perform a classification task that the AI system is trained to perform. In some embodiments, after deployment, the AI system may be used to process data points in a working dataset (e.g., to classify the data points). In some embodiments, the set of AI systems may be trained to perform a classification task. For example, the set of AI systems may be trained to: classify images of skin lesions as malignant or benign, classify histopathological images as indicating presence of a tumor or absence of a tumor, or classify patients into an Eastern Cooperative Oncology Group (ECOG) status. Performance measurements of the AI systems may be used to identify the highest performing AI system. The highest performing AI system (e.g., the one with the best performance measurement) may be selected for deployment in an environment (e.g., in a medical image processing system and/or a clinical data processing system). When the AI system is deployed in the environment, the AI system may perform a classification task on data points obtained in the environment (e.g., data points in a working dataset). For example, the deployed AI system may classify input images of skin lesions as malignant or benign, classify histopathological images as indicating presence of a tumor or absence of a tumor, or classify patients into an Eastern ECOG status using data obtained from an electronic health record (EHR) of the patients.

In some embodiments, a performance measurement of an AI system may be used to identify unreliable predictions made by the AI system. The performance measurement may include multiple values indicating performance of the AI system for different intervals of probabilities output by the AI system for predictions. For example, the performance measurement may include a measurement for each of multiple quantiles or deciles of probabilities output for different classes. When the measurement for a particular probability interval is below a threshold, then predictions (e.g., class predictions) having an associated output probability in the probability interval may be filtered out (e.g., ignored). For example, for an AI system trained to classify input images of skin legions as malignant or benign, a system employing the AI system may be configured to ignore classifications by the AI system with associated output probabilities that are in a probability interval which has been identified as unreliable (e.g., for which the performance measurement was below a threshold level). As another example, for an AI system trained to classify images as indicating presence or absence of a tumor, a system employing the AI system may be configured to ignore classifications by the AI system with associated output probabilities that are in a probability interval which has been identified as unreliable.

In some embodiments, a performance measurement of an AI system may be used to trigger an update to the AI system. For example, in some embodiments, when the performance measurement of the AI system is less than a threshold, the AI system may be retrained. In some embodiments, when the performance measurement of an AI system is less than a threshold performance, a new training dataset may be generated and the AI system may be trained using the new training dataset.

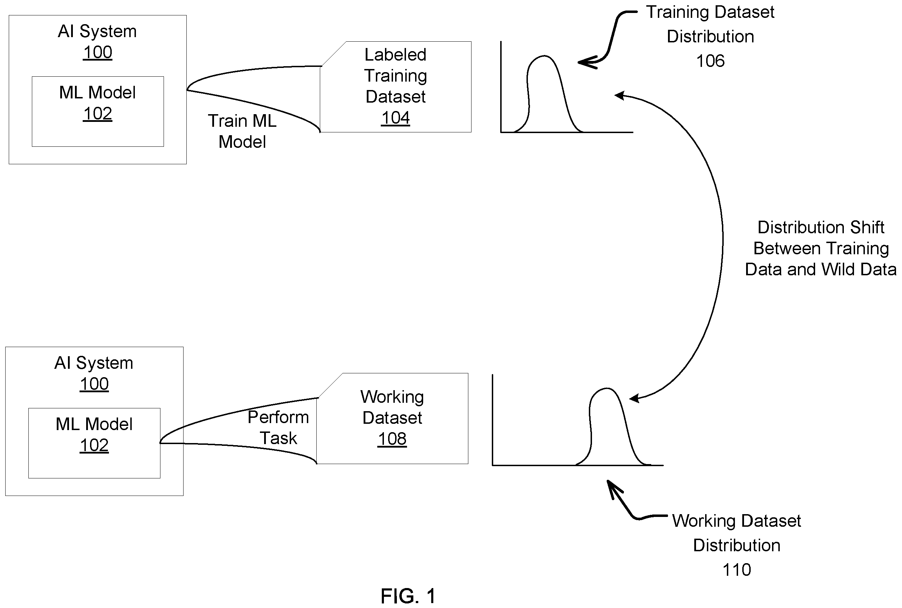

FIG. 1 illustrates distribution shift that may occur between a training dataset and data that an AI system processes after deployment to perform a task, according to some embodiments of the technology described herein. As shown in FIG. 1, an AI system 100 storing a machine learning (ML) model 102 is trained using a labeled training dataset 104. Training the AI system 100 may involve training the ML model 102 by learning parameters of the ML model 102. The ML model 102 may be trained using any suitable supervised learning technique. The supervised learning technique may be applied to the labeled training dataset 104. For example, the ML model 102 may be trained by applying a stochastic gradient descent learning algorithm to the labeled training dataset 104 in which the AI system 100 processes data points in the labeled training dataset 104 to obtain outputs (e.g., classifications). The outputs may be compared to target outputs indicated by class labels assigned to the data points in the labeled training dataset 104. Parameters of the ML model 102 may be updated based on a difference between the outputs obtained from processing the data points by the ML model 102 and the target outputs. For example, parameters (e.g., weights) of the ML model 102 may be adjusted by a fraction of a gradient determined from the difference. The supervised learning technique may iteratively adjust parameters of the ML model 102.

As illustrated in FIG. 1, after training using the labeled training dataset 104, the AI system 100 may be deployed to perform a task. The AI system 100 may perform a task for which it was trained to perform using the labeled training dataset 104. For example, the AI system 100 may perform a classification task (e.g., classifying patients from an EHR as belonging to a clinical trial cohort or not, classifying images or lesions as malignant or benign, classifying medical images as tumorous or non-tumorous, predicting a date of a patient event based on medical record data associated with a patient, or another classification task). The AI system 100 may perform the task by processing data points in a working dataset 108. The AI system 100 may process data points using the ML model 102. For example, the AI system 100 may process a data point by generating input (e.g., a set of feature values) using the data point and providing the input to the ML model 102 to obtain a corresponding output (e.g., output probabilities, a prediction, and/or a classification).

As illustrated in FIG. 1, the labeled training dataset 104 has a respective distribution 106 and the working dataset 108 has a distribution 110. In the example, the training dataset distribution 106 is different from the working dataset distribution 110. The working dataset distribution 110 is shifted in one direction relative to the training dataset distribution 106. It should be appreciated that the distribution shift illustrated in FIG. 1 is for illustrative purposes and that other types of distribution shift in addition to or instead of the one shown in FIG. 1 are possible between the training dataset distribution 106 and the working dataset distribution 110. Example types of distribution shift include a covariate shift in which a change in the distribution of covariates occurs, a label shift, concept shift, or another type of distribution shift.

The distribution shift may occur because of various possible reasons. For example, the distribution shift may result from changes in conditions over time that make the working dataset distribution 110 different from the training dataset distribution 106. As another example, the AI system 100 may be deployed in different conditions than in which the training was performed. To illustrate, the AI system 100 may be an AI system of a self-driving car that was trained in one set of climate conditions and is deployed in different set of climate conditions leading to the distribution shift. As another example, the distribution shift may have occurred due insufficient or in accurate data points in the training dataset 104. To illustrate, the training dataset 104 may not include a sufficient number of data points to accurately represent a patient population of an EHR system from which the AI system 100 processes data points after deployment.

While the distribution shift can adversely affect the behavior of the AI system 100, the absence of ground-truth labels makes it difficult to confirm the performance of the AI system 100 in perform the task. As such, it becomes challenging to identify AI predictions to rely on, select a favorable AI system for achieving some task, and even perform additional checks such as assessing algorithmic bias. Incorrect AI predictions, stemming from the distribution shift, can lead to inaccurate decisions, decreased trust, and potential issues of bias.

Conventional systems assume highly-confident predictions are reliable even though AI systems can generate highly confident incorrect predictions. Recognizing these limitations, others have demonstrated the value of modifying AI-based confidence scores through explicit calibration methods such as Platt scaling or through ensemble models. Such calibration methods, however, can be ineffective when deployed on data in the wild that exhibit distribution shift. Regardless, quantifying the effectiveness of calibration methods would still require ground-truth labels, an oft-missing element of data in the wild. Other conventional systems may focus on estimating the overall performance of models with unlabeled data. However, it tends to be model-centric, overlooking the data-centric decisions (e.g., identifying unreliable predictions) that would need to be made upon deployment of these models, and makes the oft fallible assumption that the held-out dataset is representative of working data, and therefore erroneously extends findings in the former setting to those in the latter.

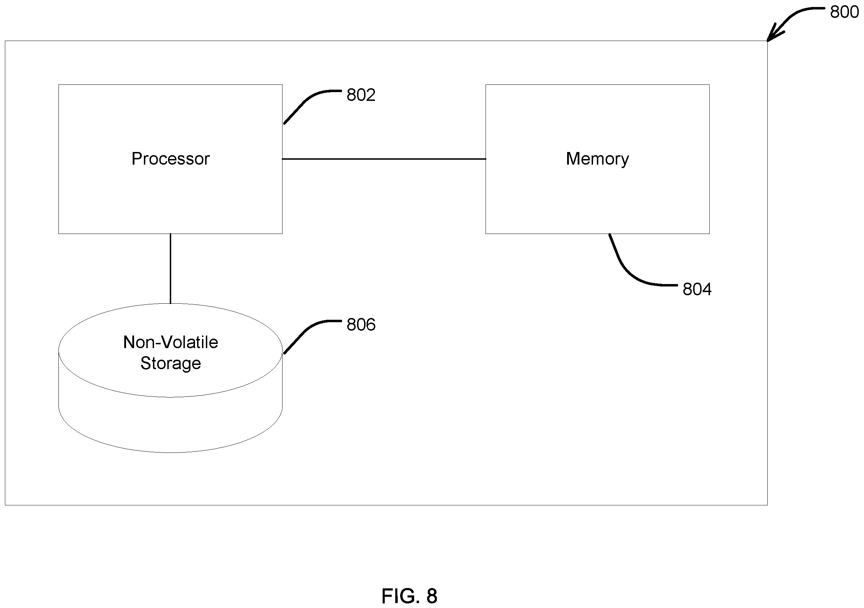

In some embodiments, AI system 100 may be a suitable computing device. Example computing devices are described herein with reference to FIG. 8. The AI system 100 may include memory storing the ML model 102. For example, the AI system 100 may store parameters of the ML model 102 in the memory. The AI system 100 may be executed by processing data using the ML model 102. For example, the AI system 100 may process data during execution by: (1) generating input to the ML model 102 using the data, and (2) providing the input to the ML model 102 to obtain output. The AI system 100 may use the output of the ML model 102 to determine an output from performing a task (e.g., a classification, prediction, and/or other output). In some embodiments, the AI system 100 may be configured to perform additional functions that use the output of the ML model 102. For example, the AI system 100 may be a clinical AI system that triggers the administration of treatment to a patient (e.g., a cancer treatment regimen) responsive to the task output (e.g., in response to classifying a medical image as indicating a tumor). As another example, the AI system 100 may be used in a control system of a vehicle to adjust vehicle operation (e.g., by changing a speed, direction, and/or other motion of the vehicle).

Example embodiments described herein may be discussed in the context of clinical AI systems. It should be appreciated that such AI systems are example AI systems that techniques described herein may utilized for. Some embodiments described herein may be used for other types of AI systems.

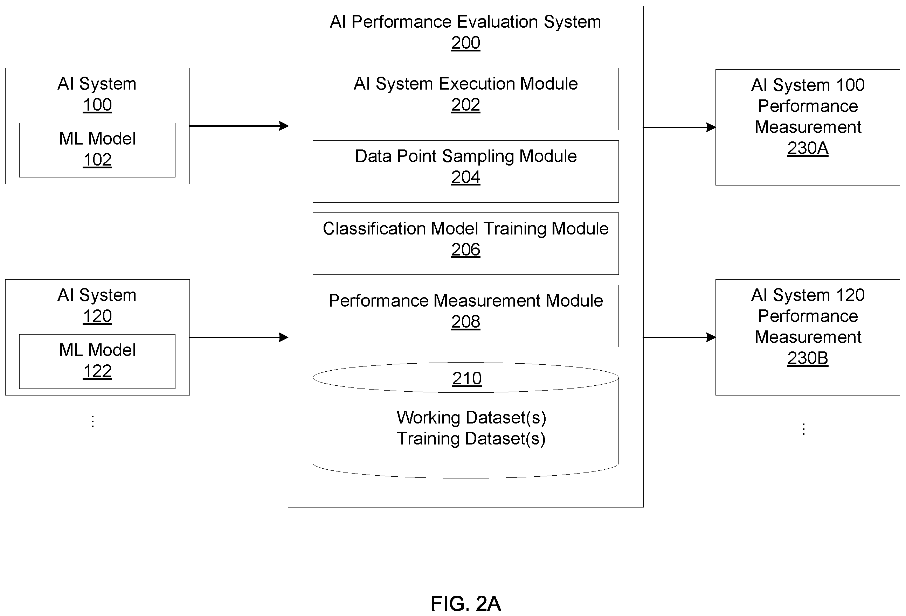

FIG. 2A illustrates an AI performance evaluation system 200 for evaluating the performance of AI systems, according to some embodiments of the technology described herein. As shown in FIG. 2A, the AI performance evaluation system 200 evaluates AI system 100 to determine a performance measurement 230A of the AI system 100. Likewise, the AI performance evaluation system 200 evaluates AI system 120 to determine a performance measurement 230B of the AI system 120. The AI performance evaluation system 200 may be configured to execute the AI systems 100, 120 to obtain outputs and use the outputs to evaluate performance of the AI systems 100, 120.

Although the example of FIG. 2A shows two AI systems 100, 120 that are evaluated by the AI performance evaluation system 200, in some embodiments, the AI performance evaluation system 200 may be configured to evaluate the performance of any number of AI systems. For example, the AI performance measurements 230A, 230B may be used to select one of the AI systems 100, 120 for deployment on a working dataset. As another example, the AI performance evaluation system 200 may identify biases in the AI systems 100, 120. As another example, the AI performance evaluation system 200 may identify unreliable predications made by the AI systems 100, 120.

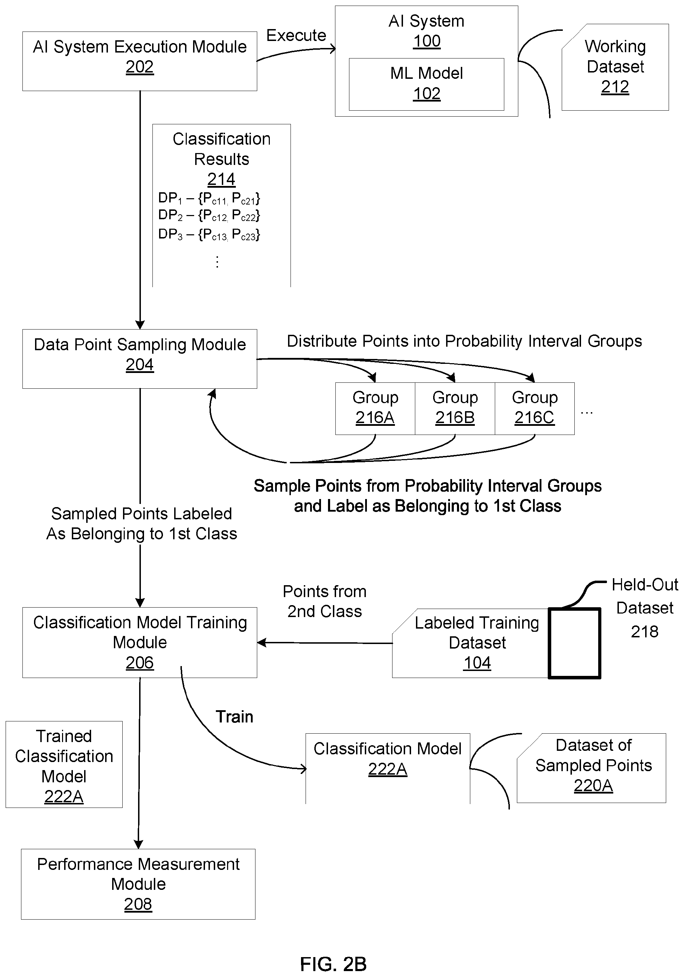

In some embodiments, the AI performance evaluation system 200 (also referred to herein as "the system 200") may be configured to determine a performance measurement of an AI system. In the example of FIG. 2A, the system 200 determines a performance measurement 230A of the AI system 100 and a performance measurement 230B of the AI system 120. The system 200 may be configured to determine the performance measurements 230A, 230B by determining a measure of performance for each the AI systems 100, 200. In some embodiments, the measure of performance may be pseudo-label discrepancy (SUDO). The SUDO measurement for an AI system indicates performance of the AI system without ground-truth labels for an unlabeled dataset that the AI system processes after deployment. The SUDO measurement may indicate performance of an ML model used by the AI system, bias of an ML model used by the AI system, and may be used to identify unreliable predictions by the AI system. Determination of a SUDO measurement for an AI system is described herein with reference to FIGs. 2B-2D.

As shown in FIG. 2A, the AI performance evaluation system 200 includes the following modules: AI system execution module 202, a data point sampling module 204, a classification model training module 206, and a performance measurement module 208. The modules may perform respective functions to generate the performance measurement 230A of the AI system 100 and the performance measurement 230B of the AI system 120.

In some embodiments, the AI system execution module 202 may be configured to execute a given AI system on a working dataset. The system 200 may not have access to ground-truth labels for data points in the working dataset. The AI system execution module 202 may be configured to execute the AI system on the working dataset by processing data points in the working dataset using the AI system to obtain output probabilities (e.g., values in the range [0, 1]) of the data points belonging to a particular class. The AI system may be configured to employ an ML model trained to classify data points into one of multiple classes. The AI system execution module 202 may process a data point using the AI system by: (1) generating input to the ML model using the data point (e.g., by generating a set of feature values as the input); and (2) providing the input to the ML model to obtain, for each of the classes, an output probability that the data point belongs to the class. The AI system execution module 202 may be configured to determine the output of the ML model for the data point by using parameters of the ML model (e.g., with values that were learned from training). For example, the input to the ML model may be a vector that the AI system execution module 202 may process by using parameters of the ML model.

In some embodiments, an ML model (e.g., ML model 102 or ML model 122) used by an AI system (e.g., AI system 102 or AI system 120) may be any suitable ML model. For example, the ML model may be a support vector machine (SVM), a decision tree, a naive bayes classifier, a neural network, a logistic regression model, a linear discriminant analysis (LDA) model, or another suitable ML model. The AI performance evaluation system 200 is not limited to evaluating performance to any particular machine learning model.

In some embodiments, the AI system execution module 202 may be configured to execute an AI system by transmitting data to the AI system. For example, the AI system execution module 202 may transmit data points as input to the AI system and obtain the corresponding output. As another example, the AI system execution module 202 may transmit a command or request to the AI system to process data points. In response to receiving data points and/or a request/command from the AI system execution module, the AI system may process the data points to generate output. Although in the example of FIG. 2A, the AI systems 100, 120 are shown as being distinct from the AI performance evaluation system 200, in some embodiments, an AI system may be implemented on the same computer system as the AI performance evaluation system 200. For example, the AI performance evaluation system 200 and an AI system may be implemented on a single computing device. As another example, the AI performance evaluation system 200 and an AI system may be implemented by one or more servers. In such embodiments, the AI system execution module 202 may be configured to directly access ML model parameters in memory to process data points.

In some embodiments, the data point sampling module 204 may be configured to sample data points from a working dataset using the output probabilities (e.g., probabilities that the data points belong to a particular class) obtained from execution of an AI system by the AI system execution module 202. The data point sampling module 204 may be configured to generate a distribution of output probabilities and discretize the output probabilities into probability intervals. For example, the data point sampling module 204 may discretize the output probabilities into quartiles, quintiles, deciles, or other suitable probability intervals. The data point sampling module 204 may be configured to sample data points from the working dataset by: (1) dividing the data points into probability interval groups, where each probability interval group contains data points with associated with output probabilities that are within a respective one of the probability intervals; and (2) sampling one or more data points from each of the probability interval groups. For example, the data point sampling module 204 may discretize the output probabilities into deciles, and divide data points into decile groups where each decile group contains data points with associated output probabilities that fall within a particular one of the deciles.

The data point sampling module 204 may be configured to sample data points from the different probability interval groups. In some embodiments, the data point sampling module 204 may be configured to sample an equal number of data points from each probability interval group. For example, the data point sampling module 204 may determine the number of data points in the probability interval group with the fewest data points, and sample that number of data points from each of the probability interval groups. In some embodiments, the data point sampling module 204 may be configured to sample data points from the probability interval groups without replacement. This may avoid a single data point from being sampled multiple times and biasing results.

The data point sampling module 204 may be configured to assign a class label to the data points sampled from the probability intervals. The class labels may not indicate a ground-truth classification of the data points. Class labels assigned to data points sampled from the probability interval groups may also be referred to as "temporary labels" or "pseudo-labels". In some embodiments, the data point sampling module 204 may be configured to assign a class label to a data point by assigning a particular value representing a class to the data point. For example, if the data point consists of a row in a table, the data point sampling module 204 may add a column to the row with an integer value indicating the class. As another example, the data point sampling module 204 may assign a metadata value to the data point indicating the class label. As another example, the data point may be a vector and the data sampling module 204 may add a value (e.g., an integer value) to the vector indicating the class label.

In some embodiments, for an AI system that is trained to classify data points into one of multiple (e.g., two) classes, the data point sampling module 204 may assign a class label to the sampled data points indicating that the data points belong to a first one of the classes. The assigned pseudo-labels may indicate a hypothesis that the sampled data points belong to the first class. The data point sampling module 204 may be configured to retrieve data points belonging to a second class from a labeled training dataset (e.g., labeled training dataset 104) that was used to train an AI system that is being evaluated (e.g., AI system 100). For example, the labeled training dataset may have been used to perform a supervised learning technique to train an ML model that the AI system is configured to use for processing data points. The labeled training dataset may include ground-truth class labels for the data points therein. The data sampling module 204 may be configured to sample data points labeled as belonging to the second class. In some embodiments, the data point sampling module 204 may be configured to sample a number of data points from the labeled training dataset that is equivalent to the number of data points sampled from the probability interval groups that were assigned a pseudo-class label.

The classification model training module 206 may be configured to train a classification model using a first set of data points assigned a class label (i.e., a pseudo-label) indicating that they belong to a first class and a second set of data points retrieved from a training dataset (e.g., training dataset 104) assigned a class label (i.e., a ground-truth label) indicating that the second set of data points belong to a second class. In some embodiments, the classification training module 206 may be configured to train the classification model using any suitable training technique. For example, the classification module 206 may apply a supervised learning algorithm (e.g., stochastic gradient descent) to a dataset composed of the first and second sets of data points to train the classification model. In some embodiments, the classification model may be any suitable classification model. For example, the classification model may be a support vector machine (SVM), a decision tree, a naive bayes classifier, a neural network, a logistic regression model, a linear discriminant analysis (LDA) model, or another suitable ML model. The classification model may be different or the same as a type of ML model employed by the AI system being evaluated. For example, if the AI system is configured to use a neural network, the classification model trained by the classification model training module 206 may be a neural network or another type of classification model.

The performance measurement module 208 may be configured to use one or more classification models to determine a measure of performance of an AI system being evaluated. In the example of FIG. 2A, the performance measurement module 208 may be configured to determine the performance measurements 230A, 230B of respective AI systems 100, 120. The performance measurement module 208 may be configured to determine the performance measurement of an AI system based on performance measurement(s) of classification model(s) trained using data points samples based on probabilities for different classes output by the AI system as a result of processing data points in a working dataset. In some embodiments, the performance measurement module 208 may be configured to determine a measure of the classification performance of a classification model on a held-out dataset from a training dataset used to train the AI system (e.g., AI system 100) being evaluated (e.g., a held-out dataset from training dataset 104 used to train AI system 100). In some embodiments, the measure of classification performance may be any suitable measure. For example, the measure of classification performance may be an area under a receiver-operating characteristic curve (AUC) of the classification model, area under the reliability-completeness curve (AURCC), accuracy, precision, recall, F1-score, or another suitable measure of classification performance. Techniques for generating a reality-completeness curve are described herein. In some embodiments, the performance measurement module 208 may be configured to determine the performance measurement of an AI system using a classification performance measurement of a trained classification model. A higher-performing classification model may indicate that the labeled training dataset (e.g., labeled training dataset 104) is a reliable representation of the working dataset (e.g., working dataset 212) on which the AI system 100 was deployed.

In some embodiments, the performance measurement module 208 may be configured to determine a SUDO measurement of an AI system being evaluated based on classification performance measurements of two classification models provided by the classification training module 206 as described herein with reference to FIGs. 2B-2D. In the example of FIGs. 2B-2D, the AI system being evaluated may be trained to classify data points into one of multiple classes including a first class and a second class. The system 200 may train two classification models and use them to determine a measure of performance (e.g., a SUDO measurement) of the AI system.

As shown in FIG. 2A, the AI performance evaluation system 200 includes a datastore 210. In some embodiments, the datastore 210 may comprise any suitable storage hardware. For example, the datastore 210 may comprise one or more hard drives for data storage. Although in the example embodiment of FIG. 2A the datastore 210 is shown as part of the system 200, in some embodiments the datastore 210 may be separate from the system 200. For example, the datastore 210 may be distributed across one or more external databases. In some embodiments, the datastore 210 may be a database. In some embodiments, the datastore 210 may be a local hard drive of the system 200. As shown in FIG. 2A, the datastore 210 stores working dataset(s) for evaluating performance of AI system(s) (e.g., AI systems 100, 120). The datastore 210 further stores training dataset(s) that the system 200 uses to evaluate performance of the AI system(s). For example, a dataset may be stored as a file (e.g., a text file, a CSV file, an XML file, or another type of file), table (e.g., a database table), or other unit of storage. In some embodiments, a dataset may comprise multiple data structures storing data points (e.g., vectors, matrices, and/or other data structures).

FIG. 2B illustrates operation of the modules 202, 204, 206, 208 of the AI performance evaluation system 200 of FIG. 2A to generate a first trained classification model 222A to use in evaluating performance of the AI system (e.g., AI system 100), according to some embodiments of the technology described herein.

As shown in FIG. 2B, the AI system execution module 202 deploys the AI system 100 on a working dataset 212.

The data points in the working dataset 212 may be unlabeled and the system 200 may not have access to ground-truth labels for the data points. The AI system execution module 202 may be configured to execute the AI system 100 to process data points in the working dataset 212 to obtain output probabilities for the data points. As shown in FIG. 2B, the execution results 214 include, for each datapoint (DP), a probability (P) that the datapoint belongs to the first class and the probability that the data point belongs to the second class. The execution results 214 include: (1) a probability $P_{c11}$ that the data point $DP_1$ belongs to the first class and a probability $P_{c21}$ that the data point $DP_1$ belongs to the second class, (2) a probability $P_{c12}$ that the data point $DP_2$ belongs to the first class and a probability $P_{c22}$ that the data point $DP_2$ belongs to the second class, and (3) a probability $P_{c13}$ that the data point $DP_3$ belongs to the first class and a probability $P_{c23}$ that the data point $DP_3$ belongs to the second class.

As shown in FIG. 2B, the data point sampling module distributes data points into probability interval groups using output probabilities that the data points belong to the first class. The probability interval groups include groups 216A, 216B, 216C. The data point sampling module may distribute the data points among the probability interval groups by: (1) discretizing the output probabilities that the data points belong to the first class into probability intervals of equal length (e.g., quartiles or deciles), and (2) distributing the data points into probability interval groups each representing one of the probability intervals. For example, each of the groups 216A, 216B, 216C may be a group of data points with associated output probabilities of belonging to the first class that fall within a particular quartile of probability values.

After distributing the data points into the probably interval groups, the data point sampling module 204 samples data points from each of the probability interval groups. For example, the data point sampling module 204 may sample an equal number of data points from each of the probability interval groups. The data point sampling module 204 further assigns a class label (e.g., a pseudo-label) to the sampled data points indicating that the sampled data points belong to the first class. The data point sampling module 204 provides the labeled set of points to the classification model training module 206 for use in training the first classification model.

As shown in FIG. 2B, the classification model training module 206 obtains data points from the labeled training dataset 104 on which the AI system 100 was trained. In particular, the classification model training module 206 obtains data points that belong to the second class (e.g., by randomly sampling a subset of the labeled training dataset 104 that belongs to the second class). The classification model training module 206 may identify the data points based on class labels assigned to the data points indicating a ground-truth label of the data points. In some embodiments, the classification model training module 206 may be configured to obtain the same number of data points from the labeled training dataset 104 as were provided from the data point sampling module 204. The classification model training module 206 thus has a first set of points labeled as belonging to the first class (i.e., the points assigned a pseudo-label provided by the data sampling module 204) and a second set of points labeled as belonging to the second class (i.e., from the labeled training dataset 104 on which the AI system 100 was trained). The classification model training module 206 trains a classification model 222A using the labeled first and second sets of data points (e.g., by applying a supervised learning algorithm to a dataset composed of the first and second sets of data points). The classification model training module 206 provides the trained classification model 222A to the performance measurement module 208 to use in determining a performance measurement of the AI system 100.

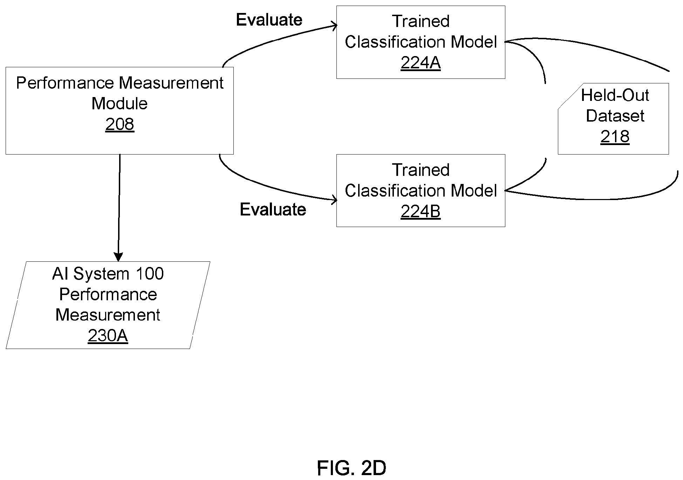

As shown in FIG. 2B, a portion of the labeled training dataset 104 was held out during training of the AI system 100. This portion is labeled the held-out dataset 218 in FIG. 2B. The held-out dataset 218 may be used by the performance measurement module 208 in determining the performance measurement 230A of the AI system 100 as described herein with reference to FIG. 2D. the points belonging to the second class retrieved by the classification model training module 206 do not belong to the held-out dataset 218 because the held-out dataset 218 is reserved for use in performance measurement.

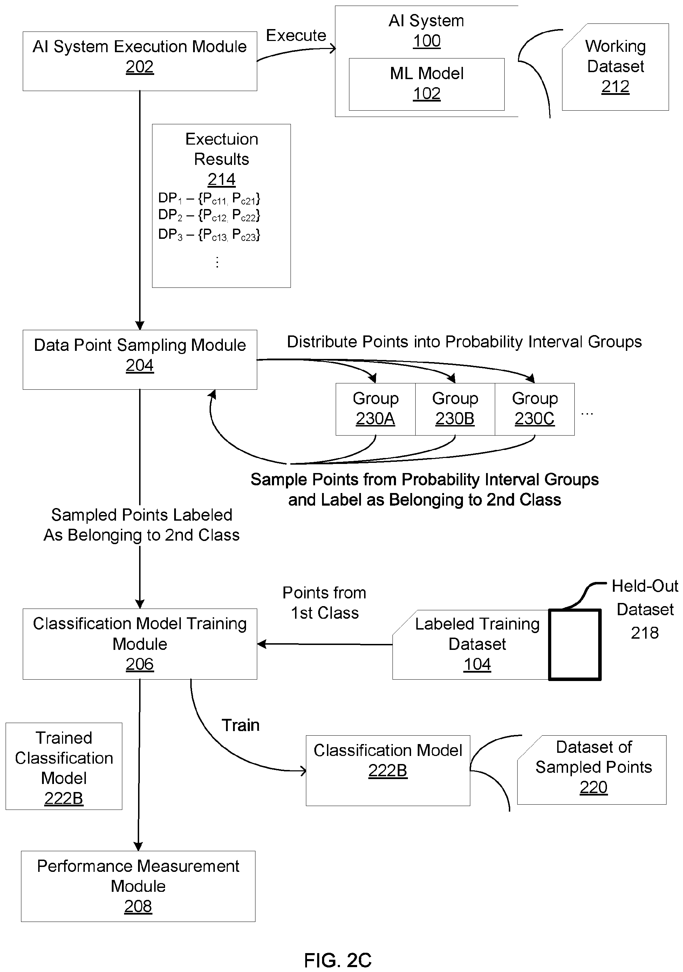

FIG. 2C illustrates operation of the modules 202, 204, 206, 208 of the AI performance evaluation system of FIG. 2A to generate a second trained classification model 222B to use in evaluating performance of an AI system, according to some embodiments of the technology described herein.

The data point sampling module 204 uses the execution results 214 to distribute data points from the working dataset 212 into probability interval groups. In FIG. 2C, the data point sampling module uses the output probabilities that the data points belong to the second class to distribute the data points into probability interval groups. The data point sampling module 204 may be configured to discretize the output probabilities into probability intervals and distribute the data points among probability interval groups as described herein with reference to FIG. 2B. The probability interval groups include groups 230A, 230B, 230C. For example, each of the groups 230A, 230B, 230C may representing quartiles of output probability values. As shown in FIG. 2C, the data point sampling module 204 samples data points from each of the probability interval groups and assigns a class label (e.g., a pseudo-label) to the sampled data points indicating that they belong to the second class. In some embodiments, the data point sampling module 204 may be configured to sample the same data points that were sampled in the example of FIG. 2B. This may mitigate differences in performance of the two classification models 222A, 222B due to differences in sampled points that were used to train the two classification models 222A, 222B. The data sampling module 204 provides the labeled data points to the classification model training module 206.

As shown in FIG. 2C, the classification model training module 206 further obtains data points from the labeled training dataset 104 that belong to the first class (e.g., by randomly sampling a subset of the labeled training dataset 104 that belongs to the first class). In some embodiments, the classification model training module 206 may obtain the same number of data points from the first class from the labeled training dataset 104 as the number of sampled data points labeled as belonging to the second class obtained from the data point sampling module 204. The data points obtained from the labeled training dataset 104 may not have been obtained from the held-out dataset 218 (which is reserved for performance measurement). The classification model training module 206 thus has a one set of data points labeled as belonging to the second class and another set of data points labeled as belonging to the first class. The classification model training module 206 trains a classification model 222B using the labeled sets of data points (e.g., by applying a supervised learning algorithm to a dataset composed of the labeled sets of data points). The classification model training module 206 provides the trained classification model 222B to the performance measurement module 208 to use in determining a performance measurement of the AI system 100.

FIG. 2D illustrates determination of the performance measurement 230A of the AI system 100 using the trained classification models 222A, 222B of FIGs. 2B-2C, according to some embodiments of the technology described herein. As shown in FIG. 2D, the performance measurement module 208 evaluates each of the trained classification models 222A, 222B on the held-out dataset 218 that was held out of the labeled training dataset 104 on which the AI system 100 was trained. To evaluate the performance of a classification model (i.e., any of the trained classification models 222A, 222B) the performance measurement module 208 may process data points in the held-out dataset 218 using the classification model to obtain output classifications for the data points. The performance measurement module 208 may be configured to compare the output classifications to the class labels associated with the data points in the held-out dataset 218. The performance measurement module 208 may be configured to determine a classification performance measurement for the classification model based on the comparison. The performance measurement module 208 may be configured to determine the classification performance measurement using a measure of classification performance (e.g., AUC, accuracy, precision, recall, F1-score, and/or another suitable measure of classification performance).

In some embodiments, the performance measurement module 208 may be configured to determine the performance measurement 230A of the AI system 100 using a classification performance measurement of one or more of the classification models 222A, 222B. A high-performing classification model may indicate that the labeled training dataset (e.g., labeled training dataset 104) is a reliable representation of the working dataset (e.g., working dataset 212) on which the AI system 100 was deployed. For example, for a given classification model, the class labels of the data points obtained from the held-out dataset 218 are known to be correct. A higher-performing classification model would indicate that the pseudo-labels assigned to the other data points (sampled from results of executing the AI system 100 to perform a task using the working dataset 212) are more likely to be correct. In other words, the classification performance measurement of the classification model 222A would indicate a likelihood that sampled points assigned a pseudo-label for the first class actually belong to the first class.

In some embodiments, the performance measurement module 208 may be configured to determine a first classification performance measurement for the trained classification model 224A and a second classification performance measurement for the trained classification model 224B. The performance measurement module 208 may be configured to use the first and second classification performance measurements to determine the performance measurement 230A of the AI system 100. In some embodiments, the performance measurement module 208 may be configured to determine the performance measurement 230A as the difference between the first and second classification performance measurements or an absolute value thereof. For example, the first classification performance measurement may be a first AUC and the second classification performance measurement may be a second AUC, and the performance measurement module 208 may determine the performance measurement 230A of the AI system 100 to be the difference between the first AUC and the second AUC or an absolute value thereof. As another example, the first classification performance measurement may be a first AURCC and the second classification performance measurement may be a second AURCC, and the performance measurement module 208 may determine the performance measurement 230A of the AI system 100 to be the difference between the first AURCC and the second AURCC or an absolute value thereof. The difference between the first and second classification performance measurements may be a SUDO measurement of the AI system 100 (which may be the performance measurement 230A of the AI system 100).

In some embodiments, the performance measurement module 208 may be configured to determine performance measurements for different probability intervals. The performance measurement module 208 may be configured to determine classification performance measurement differences between the two classification models for the probability intervals. For example, the performance measurement module 208 may determine a difference in AUC and/or AURCC for each probability interval. Accordingly, the performance measurement 230A of AI system 100 may include multiple SUDO measurements for the multiple probability intervals.

In some embodiments, the SUDO measurement of the AI system 100 may indicate an accuracy of the AI system's 100 performance on the working dataset 212 despite not having ground-truth labels for the data points in the working dataset 212. For example, the SUDO measurement may be a proxy for accuracy of the AI system 100 in performing the task on the working dataset 212. In some embodiments, the SUDO measurement may indicate a level of class contamination. Class contamination refers to a degree to which data points in different probability interval groups may belong to multiple classes.

In some embodiments, the SUDO measurement may indicate bias in model performance between different groups (e.g., male and female patients). In some embodiments, the AI performance evaluation system 200 may be configured to stratify outputs of the AI system for the data points in the working dataset 212 across the different groups. The AI performance evaluation system 200 may be configured to determine a SUDO measurement for each of the different groups using the data points and output probabilities specific to the group (e.g., using the techniques illustrated by FIGs. 2B-2D). The difference in SUDO measurements between the groups may indicate bias in the AI system (i.e., the AI system performs better for one group than another group). The SUDO measurement provides this indication without requiring ground-truth labels for the working data on which a task was performed by the AI system.

In some embodiments, the AI performance evaluation system 200 may be configured to repeat the processing depicted in FIGs. 2B-2D multiple times (e.g., 2, 3, 4, 5, 6, 7, 8, 9, 10, or another suitable number of times). In each cycle, the AI performance evaluation system 200 may sample a different set of data points from the working dataset 212 (e.g., using a different random seed). The AI performance evaluation system 200 may be configured to determine an aggregate performance of the classification models 222A, 222B obtained from the cycles. This may mitigate the effect of any particular subset of data points on the performance measurement.

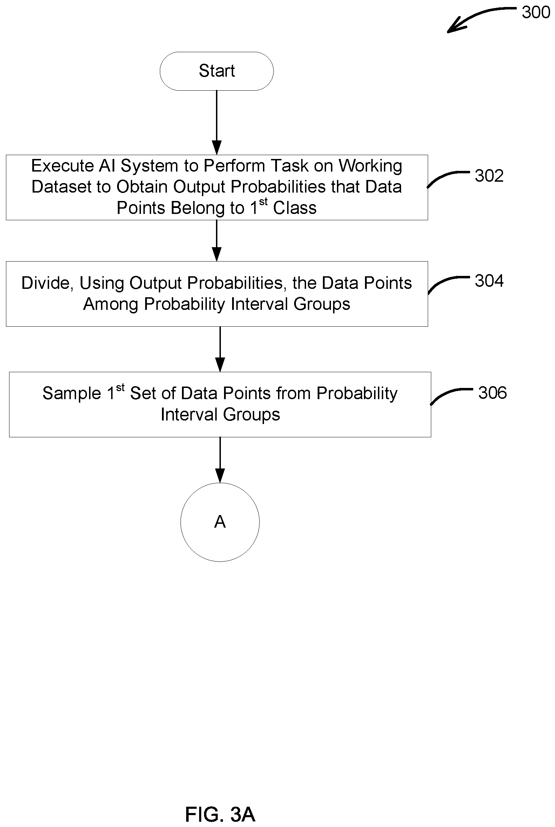

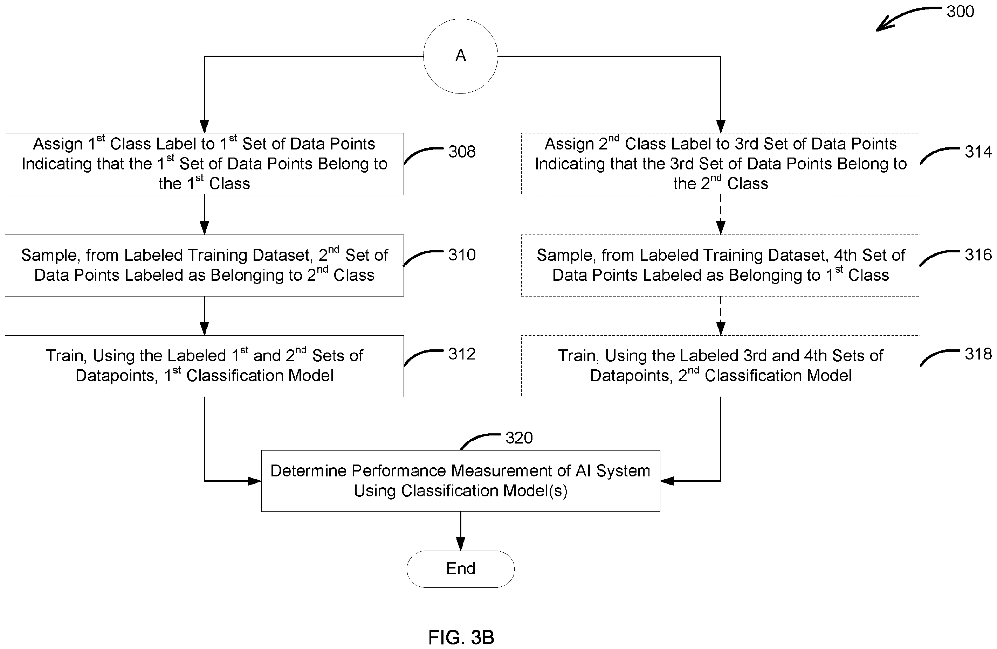

FIGs. 3A-3B illustrate an example process 300 for evaluating performance of an AI system according to some embodiments of the technology described herein. Process 300 may be performed by any suitable computing device. In some embodiments, process 300 may be performed by AI performance evaluation system 200 described herein with reference to FIGs. 2A-2D. For example, process 300 may be performed by the AI performance evaluation system 200 to evaluate performance of the AI system 100 described herein with reference to FIG. 1.

Prior to performance of process 300, the AI system being evaluated (e.g., AI system 100) may have been trained on a training dataset (e.g., training dataset 104). The training dataset 104 may include a labeled dataset with ground-truth class labels. For example, the AI system may have been trained by training a ML model (e.g., ML model 102) of the AI system by applying a supervised learning algorithm to the training dataset to learn parameters of the ML model. The learned parameters of the ML model may be used to execute the AI system. The AI system may be trained to perform a task. The task may comprise classifying a data point into one of multiple classes. The multiple classes may include a first class and a second class. The AI system may be configured to process a data point and output a probability for each of the multiple classes indicating a likelihood that the data point belongs to the class. For example, the AI system may process a data point and output a first probability that the data point belongs to the first class and a second probability that the data point belongs to the second class.

Process 300 begins at block 302, where the system performing process 300 executes the AI system to perform a task on a working dataset. The system may not have access to ground-truth labels for data points in the working dataset. The system may execute the AI system by processing data points in the working dataset. The system may process a given data point by: (1) generating input (e.g., a set of feature values) to the ML model of the AI system using the data point, and (2) providing the generated input as input to the ML model to obtain an output probability that the data point belongs to the first class. The system may accordingly process multiple (e.g., all) data points in the working dataset to obtain output probabilities that the data points belong to the first class. In some embodiments, the system may be configured to provide the data point as input to the ML model. In some embodiments, the system may be configured to derive the input using the data point (e.g., by determining one or more feature values using the data point).

Next, at block 304, the system divides the data points in the working dataset among multiple probability interval groups. The system may be configured to determine the probability interval groups and then divide the data points into the probability interval groups using the output probabilities associated with the data points. In some embodiments, the system may be configured to determine the probability interval groups by discretizing the output probabilities into multiple probability intervals (e.g., quartiles, deciles, or another set of equally sized probability intervals). Each probability interval group may consist of the data points with output probabilities that are within a particular one of the probability interval that the probability interval group is associated with.

Next, at block 306, the system samples a first set of data points from the probability interval groups. In some embodiments, the system may be configured to sample one or more data points from each of the probability interval groups. For example, the system may sample the same number (e.g., 50) of data points from each of the probability interval groups. In some embodiments, the system may be configured to sample the first set of data points from the probability interval groups without replacement. In some embodiments, the system may be configured to randomly sample data points from the probability interval groups.

Next, at block 308, the system assigns a first class label to the first set of data points indicating that the first set of data points belongs to the first class. For example, the system may assign a pseudo-label or a temporary label to the first set of data indicating that the first set of data points belongs to the first class. In some embodiments, the first class label may be a value (e.g., a numerical value) associated with each of the first set of data points indicating that the data point belongs to the first class.

Next, at block 310, the system samples, from the labeled training dataset (e.g., training dataset 104) on which the AI system (e.g., AI system 100) was trained, a second set of data points that belong to the second class. In some embodiments, the system may be configured to sample the second set of data points using ground-truth labels associated with the data points in the training dataset. For example, the system may sample (e.g., randomly sample) the second set of data points from a subset of the training dataset that is assigned a class label indicating membership to the second class. In some embodiments, the system may be configured to sample the same number of data points from the training dataset at block 310 as the number of data points that were sampled from the probability interval groups at block 308.

Next, at block 312, the system trains, using the first and second sets of data points, a first classification model to classify a data point into one of the first and second classes. Example classification models are described herein. For example, the system may apply a supervised learning algorithm to a dataset consisting of the first and second sets of data points. The supervised learning algorithm may employ the class labels assigned to the data points to perform the supervised learning algorithm.

Next, at block 320, the system determines a performance measurement of the AI system using the first classification model. In some embodiments, the system may be configured to determine the performance measurement of the AI system by: (1) determining a measure of performance of the first classification model to obtain a first classification performance measurement of the first classification model, and (2) determining the performance measurement of the AI system using the first classification performance measurement. For example, the performance measurement of the AI system may be a function of the first classification performance measurement. As another example, the performance measurement of the AI system may be the first classification performance measurement.

In some embodiments, the system may be configured to determine the performance measurement of the AI system by determining a performance measurement for each of multiple probability intervals (i.e., determined at block 304). For example, the system may determine a measure of performance for each of the probability intervals to obtain performance measurements for the different probability intervals. The performance measurement associated with a particular probability interval may indicate a reliability of outputs of the AI system with associated output probabilities in the particular probability interval.

Process 300 may optionally include the steps at blocks 314-318, as indicated by the dotted lines. In some embodiments, prior to performing the steps at blocks 314-318, the process 300 may involve repeating the step at block 306 of sampling data points from the probability interval groups. In some embodiments, the system may be configured to sample a third set of data points from the probability interval group. In some embodiments, the third set of data points may be the same as the first set of data points that was previously sampled (i.e., for the training of the first classification model). In some embodiments, the third set of data points may be different from the first set of data points that was previously sampled from the probability interval groups.

At block 314, the system assigns a second class label to the third set of data points indicating that the third set of data points belongs to the second class. For example, the system may assign a pseudo-label or a temporary label to the third set of data indicating that the third set of data points belongs to the second class. In some embodiments, the second class label may be a value (e.g., a numerical value) associated with each of the first set of data points indicating that the data point belongs to the second class.

Next, at block 316, the system samples, from the labeled training dataset (e.g., training dataset 104) on which the AI system (e.g., AI system 100) was trained, a fourth set of data points that belong to the first class. In some embodiments, the system may be configured to sample the fourth set of data points using ground-truth labels associated with the data points in the training dataset. For example, the system may sample (e.g., randomly sample) the fourth set of data points from a subset of the training dataset that is assigned a class label indicating membership to the first class. In some embodiments, the system may be configured to sample the same number of data points from the training dataset at block 316 as the number of data points that were sampled from the probability interval groups.

Next, at block 318, the system trains, using the third and fourth sets of data points, a second classification model to classify a data point into one of the first and second classes. Example classification models are described herein. For example, the system may apply a supervised learning algorithm to a dataset consisting of the third and fourth sets of data points. The supervised learning algorithm may employ the class labels assigned to the data points to perform the supervised learning algorithm.

In embodiments in which the system performs the steps at blocks 314-318, block 320 may include determining the performance measurement of the AI system using both the first and second classification models. The system may be configured to determine a first classification performance measurement of the first classification model and a second classification performance measurement of the second classification model, and determining the performance measurement of the AI system using the first and second classification performance measurements. For example, the system may determine a difference between the first and the second classification performance measurements as the performance measurement of the AI system (e.g., as the SUDO measurement of the AI system). To illustrate, the system may determine an AUC of the two classification models and determine the difference between the AUC measurements of the two classification models as the performance measurement of the AI system. As another illustrative example, the system determines an AURCC of the two classification models and determine the difference between the AURCC measurements of the two classification models as the performance measurement of the AI system (e.g., as the SUDO discrepancy).

In some embodiments, the system may be configured to determine the performance measurement of the AI system by determining a performance measurement for each of multiple probability intervals (i.e., determined at block 304). Thus, the performance measurement of the AI system may include multiple performance measurements for the different probability intervals. For example, the system may determine a measure of performance (e.g., the SUDO discrepancy) for each of the probability intervals to obtain performance measurements for the different probability intervals. The performance measurement associated with a particular probability interval may indicate a reliability of outputs of the AI system with associated output probabilities in the particular probability interval. To illustrate, the system may determine a difference in AUC and/or AURCC for each of multiple probability intervals. These differences may be multiple SUDO measurements that form a performance measurement of the AI system.

Although some embodiments described herein are illustrated in the context of AI systems that classify data points into one of two classes, some embodiments are not limited to such AI systems. Some embodiments may be used for AI systems that are configured to classify data points into one of three or more classes. In such embodiments, process 300 may be performed for all the classes. In some embodiments, a performance measurement of an AI system (e.g., a SUDO measurement) may be a maximum difference in performance between a pair of classification models trained for a class across all the classes.

In some embodiments, the process 300 may be repeated multiple times for an AI system. In each cycle of the process 300, a different set of data points may be sampled from each of the probability interval groups at block 306. For example, the process 300 may be performed 1 time, 2 times, 3 times, 4 times, 5 times, 6 times, 7 times, 8 times, 9 times, or 10 times. To illustrate, the process 300 may be repeated 5 times where each time a different set of data points is sampled from each probability interval group, as enforced by a random seed (e.g., 0 to 4 inclusive).

*Example Implementations*

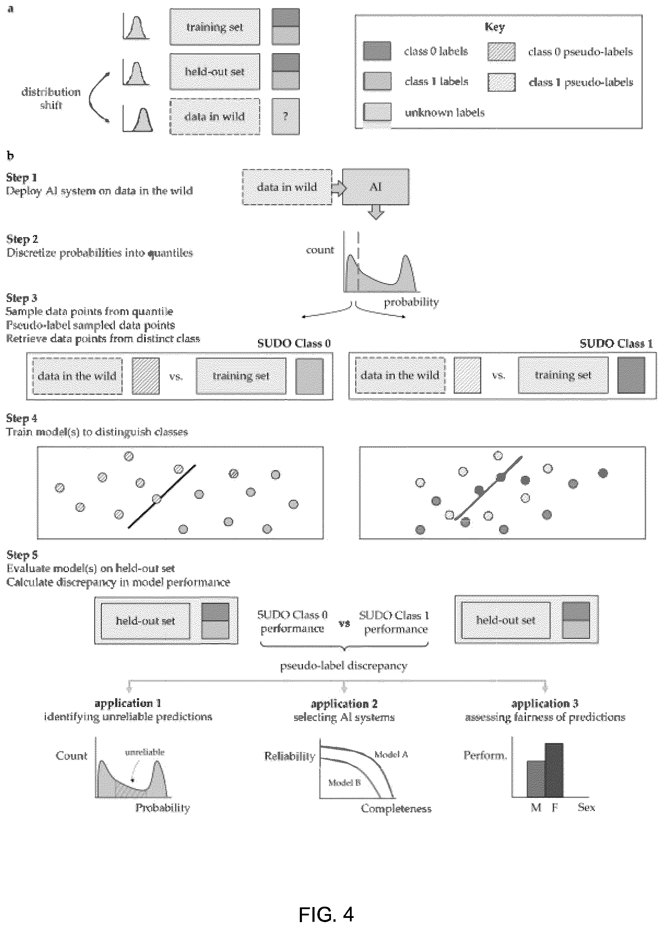

FIG. 4 illustrates an example evaluation of the performance of an AI system, according to some embodiments of the technology described herein. FIG. 4 shows: (a) that an AI system is often deployed on data in the wild, which can vary significantly from those in the held-out set (distribution shift), and which can also lack ground-truth labels, and (b) an example 5-step framework to obtain a SUDO measurement that circumvents the challenges posed by data in the wild. First, deploy an AI system on data in the wild to obtain probability values. Second, discretize those values into quantiles. Third, sample data points from each quantile and pseudo-label (temporarily label) them with a possible class (SUDO Class 0). Sample data points with ground-truth labels from the opposite class to form a classification task. Fourth, train a classifier to distinguish between these data points. Repeat the process with a different pseudo-label (SUDO Class 1). Finally, evaluate and compare the performance of the classifiers on the same held-out set of data with ground-truth labels, deriving the pseudo-label discrepancy. This discrepancy and the relative classifier performance indicate whether the sampled data points are more likely to belong to one class than another. The example 5-step framework of FIG. 4 is as follows:

1. Deploy the AI system on data points in the wild to produce output $p \in [0, 1]$ reflecting probability of positive class for each data point.
2. Generate distribution of output probabilities and discretize them into several predefined intervals (e.g., deciles).
3. Sample data points in the wild from each interval and assign them a temporary class label (pseudo-label). Retrieve an equal number of data points in the training set from the opposite class.
4. Train a classifier to distinguish between the newly pseudo-labeled data points and those with a ground-truth label.
5. Evaluate the classifier on held-out set of data with ground-truth labels (e.g., using any metric such as AUC). A performant classifier provides evidence in support of the pseudo-label. However, data points in each interval may belong to multiple classes, exhibiting class contamination. To detect this contamination, these steps are repeated for different pseudo-labels.

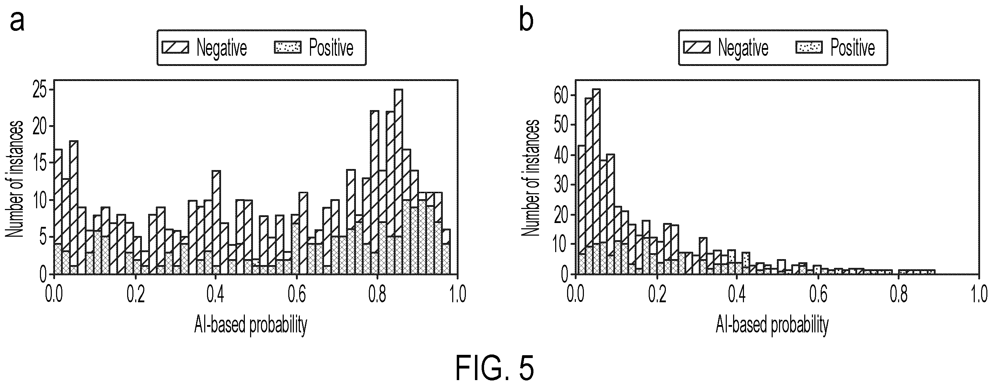

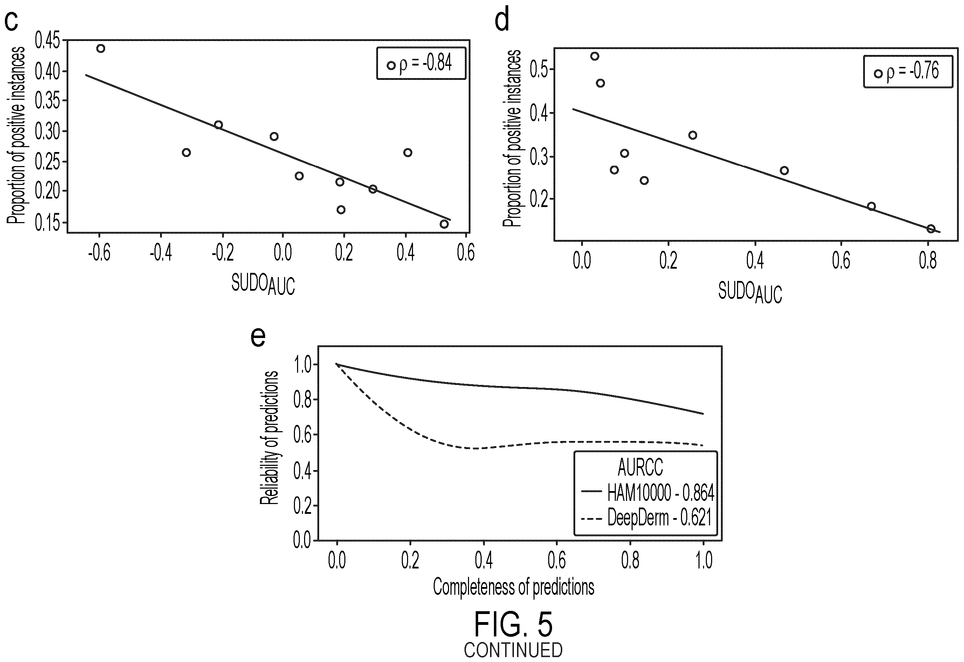

In some embodiments, a SUDO measurement is determined by calculating the discrepancy between the performance of the classifiers with different pseudo-labels. The greater the discrepancy between classifiers, the less class contamination there is, and the more likely that the data points belong to one class. FIG. 5 illustrates example AI performance measurements of two AI systems trained to categorize lesions in dermatology images as benign or malignant, according to some embodiments of the technology described herein. In the example of FIG. 5, two AI systems (left column: DeepDerm (described in Esteva, A. et al. Dermatologist-level classification of skin cancer with deep neural networks. Nature 542, 115-118 (2017)), right column: HAM10000 (described in Tschandl, P., Rosendahl, C. & Kittler, H. The ham10000 dataset, a large collection of multi-source dermatoscopic images of common pigmented skin lesions. Sci. Data 5, 1-9 (2018))) are pre-trained on the HAM10000 dataset and deployed on the entire Stanford DDI dataset described in Daneshjou, R. et al. Disparities in dermatology ai performance on a diverse, curated clinical image set. Sci. Adv. 8, eabq6147 (2022). FIG. 5 shows: (a-b) a distribution of the prediction probability values produced by the two AI systems color-coded based on the ground-truth label (negative vs. positive) of the data points, and (c-d) correlation of SUDO measurements with the proportion of positive data points in each probability interval. Results are shown for ten mutually-exclusive probability intervals that span the range [0, 1]. A strong correlation indicates that a SUDO measurement can be used to identify unreliable predictions. FIG. 5 further shows (e) reliability-completeness curves of the two AI systems, where the area under the reliability-completeness curve (AURCC) can inform the selection of an AI system without ground-truth annotations.

In the example of FIG. 5, the SUDO measurements confirm indicate that these models struggle to distinguish between benign (negative) and malignant (positive) lesions in images. This is evident by the lack of separability of the AI-based probabilities corresponding to the ground-truth negative and positive classes. As shown in FIG. 5, the SUDO measurement correlates ($\rho$ = -0.84 and -0.76 for DeepDerm and HAM10000, respectively) with the proportion of positive instances in each of the chosen probability intervals. Such a finding, which holds even if a different evaluation metric for SUDO is used, shows that SUDO is a reliable proxy for the accuracy of predictions. Notably, this ability holds irrespective of the underlying performance of the AI system being evaluated, as evidenced by the high correlation values for the two models with different performance metrics (AUC = 0.56 and 0.67 respectively).

In some embodiments, as a proxy for the accuracy of AI predictions, SUDO measurements can identify two tiers of predictions: those which are sufficiently reliable for downstream analyses and others which are unreliable and may require further inspection by a human expert. Some embodiments use a reliability-completeness curve as a way of rank ordering models when ground-truth annotations are unavailable. The performance of the mod- els is consistent with that presented in previous studies. Specifically, HAM10000 and DeepDerm achieve an area under the reliability-completeness curve (AURCC = 0.864 and 0.621, respectively) and, with ground-truth annotations, these models achieve (AUC = 0.67 and 0.56). Accordingly, SUDO can help inform model selection on data in the wild without ground-truth labels.

In some embodiments, a SUDO measurement may be used to assess algorithmic bias without ground-truth annotations. Algorithmic bias often manifests as a discrepancy in model performance across two protected groups (e.g., male and female patients). Traditionally, this would involve comparing AI predictions to ground-truth labels. SUDO measurement is a proxy for model performance and helps asses such bias even without ground-truth labels. This is demonstrated on the Stanford DDI dataset by stratifying the AI predictions according to the skin tone of the patients (Fitzpatrick scale I-II vs. V-VI) and determining a SUDO measurement for each of these stratified groups. A difference in the resultant SUDO measurements would indicate a higher degree of class contamination (and therefore poorer performance) for one group over another. The SUDO measurement identifies a bias in favor of patients with a Fitzpatrick scale of I-II without requiring ground-truth labels for the dataset being evaluated.

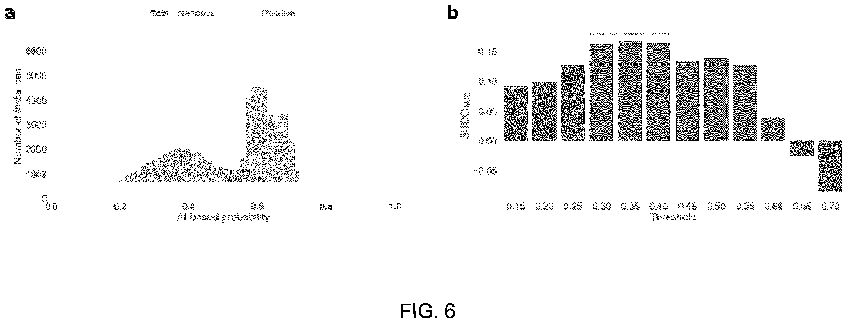

FIG. 6 illustrates an example AI performance measurement of an AI system trained to perform binary tumor classification based on a histopathological image, according to some embodiments of the technology described herein. A SUDO measurement may identify unreliable predictions on datasets that exhibit distribution shift. In the example of FIG. 6, an AI system was trained on the Camelyon17-WILDS dataset (described in Koh, Pang Wei, et al. "Wilds: A benchmark of in-the-wild distribution shifts." International conference on machine learning. PMLR, 2021.) to perform binary tumor classification (presence vs. absence) based on a single histopathological image, and evaluated on the corresponding test set. This dataset has been constructed such that the test set contains data from a hospital unseen during training, and is thus considered in the wild. The trained model achieved an average accuracy $\approx$ 0.85 despite being presented with images from an unseen hospital. FIG. 6 shows: (a) distribution of the prediction probability values produced by a model color-coded based on the ground-truth label (negative vs. positive) of the data points, and (b) SUDO measurements color-coded according to the most likely label of the predictions in each probability interval. FIG. 6 shows illustrates the relative separability of the class-specific distributions of the probabilities. The SUDO measurement further correlates ($\rho$ = -0.79) with the proportion of positive instances in each of the chosen probability intervals. The SUDO measurement quantifies the class contamination between the classes.

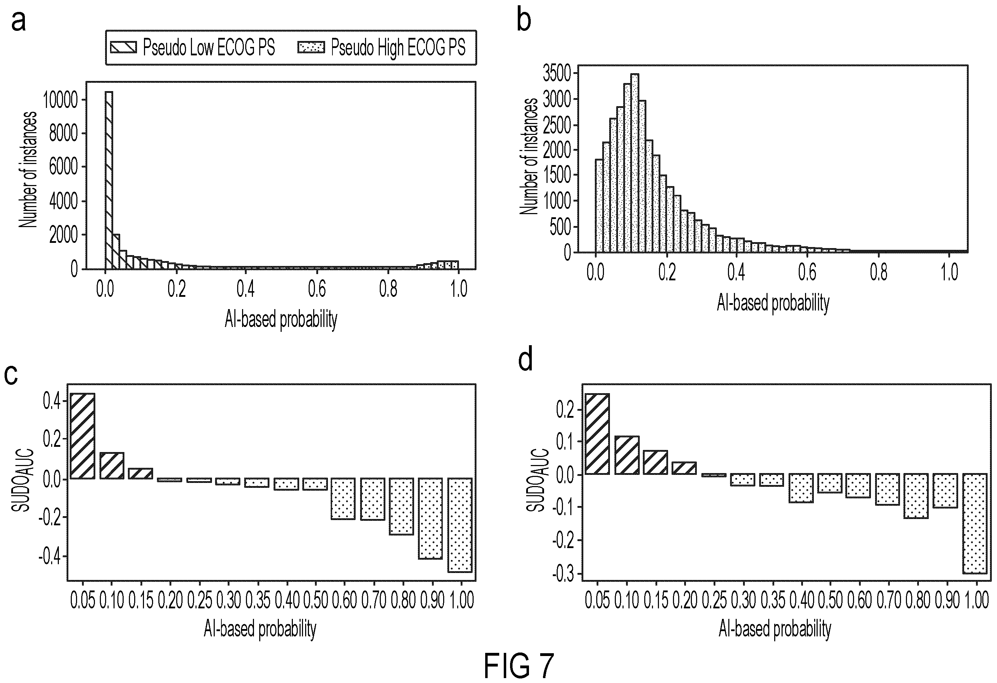

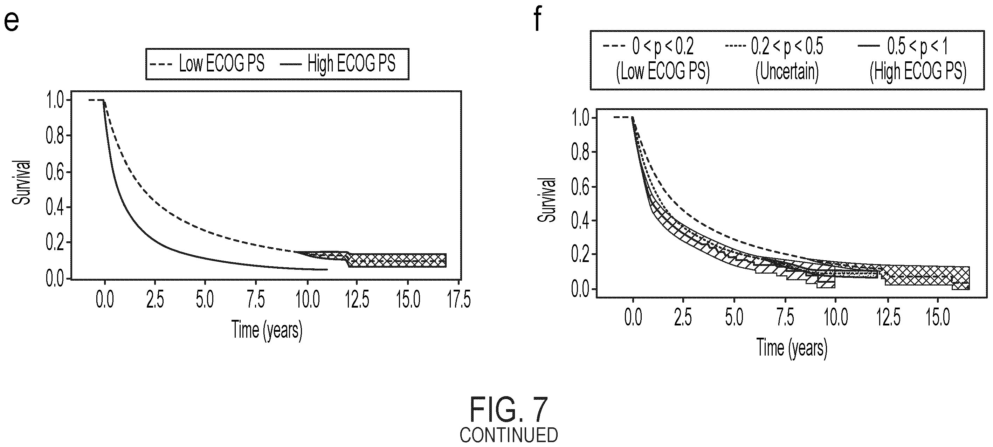

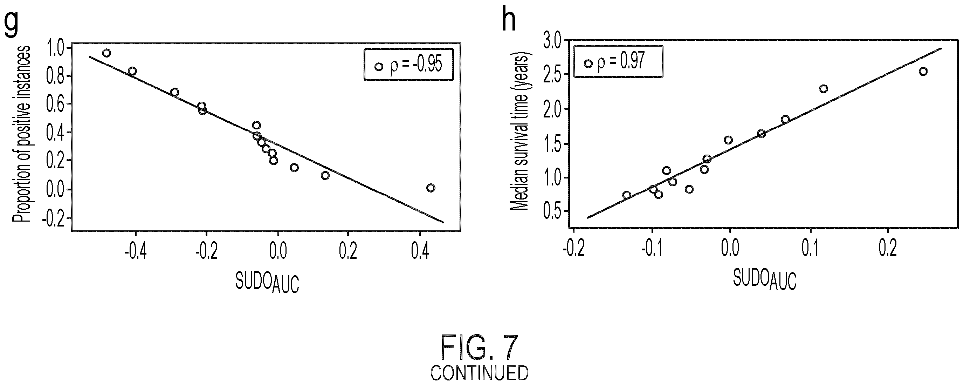

FIG. 7 illustrates identification of unreliable measurements by a trained AI system using some embodiments of the technology described herein. In the example of FIG. 7, the AI system employs a natural language processing (NLP) model and was deployed on data in the wild without ground-truth annotations. It is likely that such data (clinical notes without ECOG PS labels) follow a distribution that is distinct from that of the training data (clinical notes with ground-truth ECOG PS labels). This is supported by the distinct distributions of the prediction probability values across these datasets (see (a) and (b) in FIG. 7). Such a shift can make it ambiguous to identify unreliable predictions based exclusively on confidence scores. To resolve this ambiguity, a SUDO measurement was determined for ten distinct probability intervals, choosing more granular intervals in the range $0 < p < 0.40$ to account for the higher number of predictions (see (d) in FIG. 7). These results suggest that predictions with $0 < p < 0.20$ are more likely to belong to the low ECOG PS class than to the high ECOG PS class. The opposite holds for predictions with $0.30 < p < 1$. Such insight, which otherwise would have been impossible without ground-truth annotations, can now better inform the identification of unreliable predictions.

To gain further confidence in SUDO's ability to identify unreliable predictions, some embodiments leveraged the known relationship between ECOG PS and mortality: patients with a higher ECOG PS are at higher risk of mortality. As such, the overall survival estimates of patients for whom the AI system's output probabilities fell in particular quantiles may be compared to those of patients with known ECOG PS values (e.g., patients in the training set). The intuition is that if such overall survival estimates are similar to one another, then there is higher confidence in the ECOG PS labels that were newly assigned to clinical notes from oncology patient visits.

For patients in the training dataset, FIG. 7 shows (e) survival curves stratified according to whether they have a low or high ECOG PS. Patients in the data in the wild, for whom there is no ground-truth ECOG PS label, were first split into three distinct groups based on the SUDO measurement (see (d) in FIG. 7). A higher absolute value is reflective of more reliable predictions (e.g., |SUDOAUC| > 0.05). These groups may be referred to based on their corresponding predictions: low ECOG PS group ($0 < p \leq 0.2$, n : 12, 603), high ECOG PS group ($0.5 \leq p < 1.0$, n : 552), and an uncertain ECOG PS group ($0.2 < p < 0.5$, n : 3729). As demonstrated in an earlier section, the chosen SUDO threshold creates a trade-off between the reliability and completeness of the predictions. FIG. 7 shows (f) the group-specific survival curves. To control for confounding factors, we only considered data samples associated with the first line of therapy where patients are provided their first medication in their treatment pathway.

As shown in the example of FIG. 7, patients in the low ECOG PS group do indeed exhibit a longer median survival time than patients in the high ECOG PS group (1.87 vs. 0.68 years, respectively) (as shown in (f) of FIG. 7). Further, the chosen probability intervals based on which the survival analysis was stratified reasonably identified distinct patient cohorts. This is evident by the distinct survival curves of the patient cohorts with $0 < p \leq 0.2$ and $0.5 \leq p < 1$ and their similarity to the survival curves of patients with a ground-truth ECOG PS label as shown in (e) of FIG. 7. For example, the median survival estimates of these two patient cohorts are 2.07 (vs. 1.87) and 0.95 (vs. 0.68) years, respectively. These values are similar enough to suggest that these newly-identified patient cohorts correspond to low and high ECOG PS patient cohorts.

As illustrated by the examples of FIGs. 4-7, embodiments described herein can evaluate AI systems without ground-truth annotations. First, SUDO measurements work well across multiple data modalities (images, text, simulation). Accordingly, a SUDO measurement may be used irrespective of the modality of data a model is evaluated on. Second, SUDO measurement is agnostic to the neural network architecture of the AI system being evaluated (convolutional for images, feed-forward for text). Third, a SUDO measurement may use as few as 50 data points sampled from each probability interval. Although sampling too few data points did not change the absolute value of SUDO, and thereby reliably quantifying class contamination, it did alter its directionality (negative or positive), affecting the perceived proportion of the majority class in a set of predictions. In some embodiments, at least 50% of the data points in each probability interval may be sampled in order to capture a representative set of predictions. In some embodiments, the absolute value of a SUDO measurement may be used to identify unreliable predictions. Only if that value is large enough (i.e., low class contamination) should its directionality be considered.

In some embodiments, a SUDO measurement is unperturbed by an imbalance in the number of data points from each class or by the presence of a third-and-unseen class (on the simulated dataset). If data in the wild are suspected to exhibit these features, then a SUDO measurement can still be used. In some embodiments, a SUDO measurement produces consistent results irrespective of the classifier used to distinguish between pseudo-labelled and ground-truth data points and of the metric used to evaluate these classifiers. Accordingly, some embodiments may use a lightweight classifier (to speed up computation) and the metric most suitable for the task at hand.

In some embodiments, a SUDO measurement correlates with a meaningful variable. When ground-truth annotations are available, this variable was chose to be the proportion of positive instances in each probability interval (i.e., accuracy of predictions). Without ground-truth annotations, a median survival time of patients was chosen in each interval. Specifically, the correlation between SUDO and the median survival time of patient cohorts in each of the ten chosen probability intervals (see (h) in FIG. 7) was quantified. These two variables are indeed strongly correlated ($|\rho| = 0.97$). Accordingly, a SUDO measurement can provide useful insight into the clinical characteristics of patient cohorts in datasets without ground-truth labels.

In some embodiments, a SUDO measurement of an AI system may supplement confidence scores to identify unreliable predictions, help in the selection of AI systems, and/or assess the algorithmic bias of such systems despite the absence of ground-truth annotations. Although example described herein use clinical AI systems and datasets, some embodiments described herein are not limited to such AI systems. Some embodiments may be employed for any AI system.

*Example Applications of Techniques for Evaluating Performance of AI Systems*

Some embodiments may be used to identify unreliable predictions by an AI system, selecting an AI system from among multiple possible AI systems, and/or assessing bias of an AI system.

Identifying unreliable AI-based predictions, those whose assigned label may be incorrect, is critical for avoiding the propagation of error through downstream operations that rely on output of an AI system. Some embodiments provide an estimate of the degree of class contamination for data points whose corresponding AI-based output probabilities are in some probability interval. Specifically, a smaller SUDO measurement (small difference in classifier performance across pseudo-label settings) implies greater class contamination. AI-predictions with associated probabilities in a probability interval in which IDI < $\tau$ (where IDI is the SUDO measurement and $\tau$ is some predefined threshold) may be identified as unreliable.

An AI system is often chosen based on its reported performance on a held-out set of data. In some embodiments, a favorable AI system may be one which performs best on a held-out set of data compared to a handful of models. The ultimate goal is to deploy the favorable model on data in the wild. However, with data in the wild exhibiting a distribution shift and lacking ground-truth labels, it is unknown what the performance of the chosen AI system would be on the data in the wild, thereby making it difficult to assess whether it actually is favorable for achieving its goal. Accordingly, SUDO measurements of AI systems may be used to select which of them will likely perform the best on data in the wild.

Assessing algorithmic bias is critical for performance after deployment of AI systems on working data. A common approach to quantify such bias is through a difference in AI system performance across groups of data points (e.g., those in different gender groups). Conventional approaches, however, require ground-truth labels which are absent from data points in the wild thereby making an assessment of bias out-of-reach. However, a SUDO measurements reliably indicates algorithmic bias of an AI system without requiring ground-truth labels.

*Producing Reliability Completeness-Curves*

The completeness of a variable (the proportion of missing values that are inferred) is equally important as the reliability of the predictions that are being made by a model. However, these two goals of data completeness and data reliability are typically at odds with one another. Quantifying this trade-off confers a twofold benefit. It allows identification of the level of reliability that would be expected when striving for a certain level of data completeness. Moreover, it allows for model selection, where preferred models are those that achieve a higher degree of reliability for the same level of completeness. To quantify this trade-off, some embodiments quantify the reliability of predictions *without ground-truth labels* and their completeness.

SUDO measurement reflects the degree of class contamination within a probability interval. The higher the absolute value of a SUDO measurement, the lower the degree of class contamination. Given a set of low probability thresholds, $\alpha \in A,$ and high probability thresholds, $\beta \in B,$ we can make predictions $\hat{y}$ of the following form,

$$y^\wedge = \begin{cases} 0, p \leq \alpha \\ 1, p \geq \beta \end{cases} \tag{1}$$

To calculate the reliability $R_{A,B}$ of such predictions, some embodiments average the absolute values of SUDO measurement for the set of probability thresholds (A, B),

$$R_{A,B} = \frac{1}{2*|A||B|} \sum_{\alpha \in A, \beta \in B} |SUDO(\alpha)| + |SUDO(\beta)| \tag{2}$$

By identifying the maximum probability threshold in the set, A, and the minimum probability threshold in the set, *B,* the completeness, $C_{A,B} \in [0, 1]$, can be defined as the fraction of data points that fall within this range of probabilities,

$$C_{A,B} = \sum_{j=1}^{M} 1[p_j \leq \max(A) \text{ or } p_j \geq \min(B)] \tag{3}$$

After iterating over *K* sets of *A* and *B,* the reliability-completeness (RC) curve may be populated for a particular model of interest. From this curve, the area under the reliability-completeness curve, or the AURCC $\in [0, 1]$ may be derived.

$$AURCC = \frac{1}{2K} \sum_{k=1}^{K} \frac{R_{A,B}(k) + R_{A,B}(k+1)}{\Delta C_{A,B}} \tag{4}$$

Whereas the area under the receiver operating characteristic curve (AUROC) summarizes the performance of a model when deployed on labelled data points, the AURCC does so on *unlabeled* data points. Given this capability, the AURCC can also be used to compare the performance of different models.

*Example Embodiments*

Some embodiments provide a system for evaluating performance of an artificial intelligence (AI) system in performing a task on a dataset without having ground truth labels for data points in the dataset. The system comprises: memory storing parameters of a machine learning model of the AI system, the machine learning model being trained to classify a data point into one of a plurality of classes, the plurality of classes including a first class and a second class; and a computer hardware processor configured to: execute the AI system to perform the task on the dataset at least in part by processing, using the parameters of the machine learning model, data points in the dataset to obtain output probabilities that the data points belong to the first class; divide, using the output probabilities that the data points belong to the first class, the data points in the unlabeled dataset among a plurality of probability interval groups; sample one or more data points from each of at least some of the plurality of probability interval groups to obtain a first set of data points; assign a first class label to the first set of data points indicating that the first set of data points belong to the first class; sample, from the first labeled training dataset, a second set of data points labeled as belonging to the second class; train, using the labeled first set and second sets of data points, a first classification model to classify a data point into one of the first class or the second class; and determine a performance measurement of the AI system using the first classification model.

In some embodiments, the computer hardware processor is further configured to determine the performance measurement of the AI system using the first classification model by performing: determine, using a second labeled training dataset, a classification performance measurement of the first classification model; and determine the performance measurement of the AI system using the classification performance measurement of the classification model.

In some embodiments, the computer hardware processor is further configured to: assign a second class label to the first set of data points indicating that the first set of data points belongs to the second class; obtain, from the first labeled training dataset, a third set of data points labeled as belonging to the first class; train, using the first set of data points assigned the second class label and the third set of data points labeled as belonging to the first class, a second classification model; and determine the performance measurement of the AI system using the second classification model. In some embodiments, the computer hardware processor is further configured to determine the performance measurement of the AI system using the first classification model and the second classification model by performing: determine, using a second labeled training dataset, a first classification performance measurement of the first classification model and a second classification performance measurement of the second classification model; and determine the performance measurement of the AI system using the first classification performance measurement of the first classification model and the second classification performance measurement of the second classification model.

In some embodiments, the computer hardware processor is further configured to determine the performance measurement of the AI system using the first classification performance measurement of the first classification model and the second classification performance measurement of the second classification model by performing: determining a difference between the first classification performance measurement of the first classification model and the second classification performance measurement of the second classification model; and determine the performance measurement of the AI system using the difference. In some embodiments, the computer hardware processor is further configured to determine, using the second labeled training dataset, the first classification performance measurement of the first classification model and the second classification performance measurement of the second classification model by performing: determining an area under a receiver-operating characteristic curve (AUC) of the first classification model as the first classification performance measurement of the first classification model; and determining an AUC of the second classification model as the second classification performance measurement of the second classification model. In some embodiments, the computer hardware processor is further configured to determine, using the second labeled training dataset, the first classification performance measurement of the first classification model and the second classification performance measurement of the second classification model by performing: determining an area under a reliability-completeness curve (AURCC) of the first classification model as the first classification performance measurement of the first classification model; and determining an AURCC for the second classification model as the second classification performance measurement of the second classification model. In some embodiments, the second labeled training dataset is a reserved portion of a training dataset that includes the first labeled training dataset used to train the AI system.

In some embodiments, the computer hardware processor is further configured to: determine that the performance measurement of the AI system fails to meet a threshold performance measurement; and when it is determined that the performance of the AI system fails to meet the threshold performance measurement: update the first labeled training dataset to obtain an updated first labeled training dataset; and train the AI system using the updated first labeled training dataset.

In some embodiments, the AI system is trained to classify images of skin lesions, wherein the first class indicates a malignant skin lesion and the second class indicates a benign skin lesion. In some embodiments, the AI system is trained to perform tumor classification on histopathological images, wherein the first class indicates a presence of a tumor and the second class indicates absence of a tumor. In some embodiments, the AI system is trained to classify a set of oncology clinical notes into an Eastern Cooperative Oncology Group (ECOG) status.

In some embodiments, the computer hardware processor is configured to determine the performance measurement of the AI system by performing: determining performance measurements for the plurality of probability interval groups. In some embodiments, the computer hardware processor is configured to identify unreliable predictions of the AI system using the performance measurements for the plurality of probability interval groups.

In some embodiments, the computer hardware processor is further configured to: select the AI system from among a plurality of AI systems for deployment in an environment based on the performance measurement of the AI system. In some embodiments, the plurality of AI systems comprises a plurality of AI systems trained to: classify images of skin lesions as malignant or benign, classify histopathological images as indicating presence of a tumor or absence of a tumor, or classify patients into an ECOG status; and the computer hardware processor is further configured to deploy the selected AI system in the environment by performing a classification task that the selected AI system is trained to perform by executing the AI system on a working dataset obtained in the environment.

In some embodiments, the AI system comprises a clinical AI system configured to perform classification of medical images and the computer hardware processor is further configured to: determine a plurality of performance measurements for a plurality of configurations of the clinical AI system, each configuration of the clinical AI system employing a different machine learning model, the plurality of performance measurements including the performance measurement determined using the first classification model; select one of the plurality of configurations of the clinical AI system using the plurality of performance measurements; and deploy the clinical AI system with the selected configuration in a clinical environment by using the clinical AI system with the selected configuration to classify medical images obtained in the clinical environment.

Some embodiments provide a method for evaluating performance of an artificial intelligence (AI) system in performing a task on a dataset without having ground truth labels for data points in the dataset. The method comprises using a computer hardware processor to perform: accessing, from memory, parameters of a machine learning model of the AI system, the machine learning model trained to classify a data point into one of a plurality of classes, the plurality of classes including a first class and a second class; executing the AI system to perform the task on the dataset at least in part by processing, using the parameters of the machine learning model, data points in the dataset to obtain output probabilities that the data points belong to the first class; dividing, using the output probabilities that the data points belong to the first class, the data points in the unlabeled dataset among a plurality of probability interval groups; sampling one or more data points from each of at least some of the plurality of probability interval groups to obtain a first set of data points; assigning a first class label to the first set of data points indicating that the first set of data points belong to the first class; sampling, from the first labeled training dataset, a second set of data points labeled as belonging to the second class; training, using the labeled first set and second sets of data points, a first classification model to classify a data point into one of the first class or the second class; and determining a performance measurement of the AI system using the first classification model.

In some embodiments, determining the performance measurement of the AI system using the first classification model comprises: determining, using a second labeled training dataset, a classification performance measurement of the first classification model; and determining the performance measurement of the AI system using the classification performance measurement of the classification model. In some embodiments, the method further comprises: assigning a second class label to the first set of data points indicating that the first set of data points belongs to the second class; obtaining, from the first labeled training dataset, a third set of data points labeled as belonging to the first class; training, using the first set of data points assigned the second class label and the third set of data points labeled as belonging to the first class, a second classification model; and determining the performance measurement of the AI system using the second classification model.

Some embodiments provide a non-transitory computer-readable medium storing instructions that, when executed by a computer hardware processor, cause the computer hardware processor to perform a method for evaluating performance of an artificial intelligence (AI) system in performing a task on a dataset without having ground truth labels for data points in the dataset. The method comprises: accessing, from memory, parameters of a machine learning model of the AI system, the machine learning model trained to classify a data point into one of a plurality of classes, the plurality of classes including a first class and a second class; executing the AI system to perform the task on the dataset at least in part by processing, using the parameters of the machine learning model, data points in the dataset to obtain output probabilities that the data points belong to the first class; dividing, using the output probabilities that the data points belong to the first class, the data points in the unlabeled dataset among a plurality of probability interval groups; sampling one or more data points from each of at least some of the plurality of probability interval groups to obtain a first set of data points; assigning a first class label to the first set of data points indicating that the first set of data points belong to the first class; sampling, from the first labeled training dataset, a second set of data points labeled as belonging to the second class; training, using the labeled first set and second sets of data points, a first classification model to classify a data point into one of the first class or the second class; and determining a performance measurement of the AI system using the first classification model.

*Example Computer System*

FIG. 8 illustrates an example computer system 800 that may be specially configured to implement some embodiments of the technology described herein. The computer system 800 may include one or more computer hardware processors 802 and non-transitory computer-readable storage media (e.g., memory 804 and one or more non-volatile storage 804). The processor(s) 802 may control writing data to and reading data from (1) the memory 804; and (2) the non-volatile storage device(s) 806. To perform any of the functionality described herein, the processor(s) 802 may execute one or more processor-executable instructions stored in one or more non-transitory computer-readable storage media (e.g., the memory 804), which may serve as non-transitory computer-readable storage media storing processor-executable instructions for execution by the processor(s) 802.

The terms "program" or "software" are used herein in a generic sense to refer to any type of computer code or set of processor-executable instructions that can be employed to program a computer or other processor (physical or virtual) to implement various aspects of embodiments as discussed above. Additionally, according to one aspect, one or more computer programs that when executed perform methods of the disclosure provided herein need not reside on a single computer or processor, but may be distributed in a modular fashion among different computers or processors to implement various aspects of the disclosure provided herein.

Processor-executable instructions may be in many forms, such as program modules, executed by one or more computers or other devices. Generally, program modules include routines, programs, objects, components, data structures, etc. that perform tasks or implement abstract data types. Typically, the functionality of the program modules may be combined or distributed.

Various inventive concepts may be embodied as one or more processes, of which examples have been provided. The acts performed as part of each process may be ordered in any suitable way. Thus, embodiments may be constructed in which acts are performed in an order different than illustrated, which may include performing some acts simultaneously, even though shown as sequential acts in illustrative embodiments.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, for example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements);etc.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

Use of ordinal terms such as "first," "second," "third," etc., in the claims to modify a claim element does not by itself connote any priority, precedence, or order of one claim element over another or the temporal order in which acts of a method are performed. Such terms are used merely as labels to distinguish one claim element having a certain name from another element having a same name (but for use of the ordinal term). The phraseology and terminology used herein is for the purpose of description and should not be regarded as limiting. The use of "including," "comprising," "having," "containing", "involving", and variations thereof, is meant to encompass the items listed thereafter and additional items.

Having described several embodiments of the techniques described herein in detail, various modifications, and improvements will readily occur to those skilled in the art. Such modifications and improvements are intended to be within the spirit and scope of the disclosure. Accordingly, the foregoing description is by way of example only, and is not intended as limiting. The techniques are limited only as defined by the following claims and the equivalents thereto.

## Claims

1.  A system for evaluating performance of an artificial intelligence (AI) system in performing a task on a dataset without

**EP 4 538 932 A1**

having ground truth labels for data points in the dataset, the system comprising:

> memory storing parameters of a machine learning model of the AI system, the machine learning model being trained to classify a data point into one of a plurality of classes, the plurality of classes including a first class and a second class; and
> a computer hardware processor configured to:
>
> > execute the AI system to perform the task on the dataset at least in part by processing, using the parameters of the machine learning model, data points in the dataset to obtain output probabilities that the data points belong to the first class;
> > divide, using the output probabilities that the data points belong to the first class, the data points in the unlabeled dataset among a plurality of probability interval groups;
> > sample one or more data points from each of at least some of the plurality of probability interval groups to obtain a first set of data points;
> > assign a first class label to the first set of data points indicating that the first set of data points belong to the first class;
> > sample, from the first labeled training dataset, a second set of data points labeled as belonging to the second class;
> > train, using the labeled first set and second sets of data points, a first classification model to classify a data point into one of the first class or the second class; and
> > determine a performance measurement of the AI system using the first classification model.

2. The system of claim 1, wherein the computer hardware processor is further configured to determine the performance measurement of the AI system using the first classification model by performing:

> determine, using a second labeled training dataset, a classification performance measurement of the first classification model; and
> determine the performance measurement of the AI system using the classification performance measurement of the classification model.

3. The system of claim 1 or 2, wherein the computer hardware processor is further configured to:

> assign a second class label to the first set of data points indicating that the first set of data points belongs to the second class;
> obtain, from the first labeled training dataset, a third set of data points labeled as belonging to the first class;
> train, using the first set of data points assigned the second class label and the third set of data points labeled as belonging to the first class, a second classification model; and
> determine the performance measurement of the AI system using the second classification model.

4. The system of claim 3, wherein the computer hardware processor is further configured to determine the performance measurement of the AI system using the first classification model and the second classification model by performing:

> determine, using a second labeled training dataset, a first classification performance measurement of the first classification model and a second classification performance measurement of the second classification model; and
> determine the performance measurement of the AI system using the first classification performance measurement of the first classification model and the second classification performance measurement of the second classification model.

5. The system of claim 4, wherein the computer hardware processor is further configured to determine the performance measurement of the AI system using the first classification performance measurement of the first classification model and the second classification performance measurement of the second classification model by performing:

> determining a difference between the first classification performance measurement of the first classification model and the second classification performance measurement of the second classification model; and
> determine the performance measurement of the AI system using the difference.

6. The system of claim 4 or 5, wherein the computer hardware processor is further configured to determine, using the

21

second labeled training dataset, the first classification performance measurement of the first classification model and the second classification performance measurement of the second classification model by performing:

determining an area under a receiver-operating characteristic curve (AUC) of the first classification model as the first classification performance measurement of the first classification model; and

determining an AUC of the second classification model as the second classification performance measurement of the second classification model.

7. The system of claim 4, 5, or 6, wherein the computer hardware processor is further configured to determine, using the second labeled training dataset, the first classification performance measurement of the first classification model and the second classification performance measurement of the second classification model by performing:

determining an area under a reliability-completeness curve (AURCC) of the first classification model as the first classification performance measurement of the first classification model; and

determining an AURCC for the second classification model as the second classification performance measurement of the second classification model.

8. The system of claim 4, 5, 6, or 7 wherein the second labeled training dataset is a reserved portion of a training dataset that includes the first labeled training dataset used to train the AI system.

9. The system of any preceding claim, wherein the computer hardware processor is further configured to:

determine that the performance measurement of the AI system fails to meet a threshold performance measurement; and

when it is determined that the performance of the AI system fails to meet the threshold performance measurement:

update the first labeled training dataset to obtain an updated first labeled training dataset; and

train the AI system using the updated first labeled training dataset.

10. The system of any preceding claim, wherein the AI system is trained to:

classify images of skin lesions, wherein the first class indicates a malignant skin lesion and the second class indicates a benign skin lesion;

perform tumor classification on histopathological images, wherein the first class indicates a presence of a tumor and the second class indicates absence of a tumor; or

classify a set of oncology clinical notes into an Eastern Cooperative Oncology Group (ECOG) status.

11. The system of any preceding claim, wherein the computer hardware processor is configured to

determine the performance measurement of the AI system by determining performance measurements for the plurality of probability interval groups; and

identify unreliable predictions of the AI system using the performance measurements for the plurality of probability interval groups.

12. The system of any preceding claim, wherein the computer hardware processor is further configured to:
select the AI system from among a plurality of AI systems for deployment in an environment based on the performance measurement of the AI system.

13. The system of claim 12, wherein:

the plurality of AI systems comprises a plurality of AI systems trained to: classify images of skin lesions as malignant or benign, classify histopathological images as indicating presence of a tumor or absence of a tumor, or classify patients into an ECOG status; and

the computer hardware processor is further configured to deploy the selected AI system in the environment by performing a classification task that the selected AI system is trained to perform by executing the AI system on a working dataset obtained in the environment.

14. The system of any preceding claim, wherein the AI system comprises clinical AI system configured to perform classification of medical images and the computer hardware processor is further configured to:

determine a plurality of performance measurements for a plurality of configurations of the clinical AI system, each configuration of the clinical AI system employing a different machine learning model, the plurality of performance measurements including the performance measurement determined using the first classification model;
select one of the plurality of configurations of the clinical AI system using the plurality of performance measurements; and
deploy the clinical AI system with the selected configuration in a clinical environment by using the clinical AI system with the selected configuration to classify medical images obtained in the clinical environment.

15. A computer-implemented method for evaluating performance of an artificial intelligence (AI) system in performing a task on a dataset without having ground truth labels for data points in the dataset, the method comprising:
using a computer hardware processor to perform:

accessing, from memory, parameters of a machine learning model of the AI system, the machine learning model trained to classify a data point into one of a plurality of classes, the plurality of classes including a first class and a second class;
executing the AI system to perform the task on the dataset at least in part by processing, using the parameters of the machine learning model, data points in the dataset to obtain output probabilities that the data points belong to the first class;
dividing, using the output probabilities that the data points belong to the first class, the data points in the unlabeled dataset among a plurality of probability interval groups;
sampling one or more data points from each of at least some of the plurality of probability interval groups to obtain a first set of data points;
assigning a first class label to the first set of data points indicating that the first set of data points belong to the first class;
sampling, from the first labeled training dataset, a second set of data points labeled as belonging to the second class;
training, using the labeled first set and second sets of data points, a first classification model to classify a data point into one of the first class or the second class; and
determining a performance measurement of the AI system using the first classification model.

FIG. 1

FIG. 2A

FIG. 2B

AI System Execution Module
202

Execute →

AI System
100

ML Model
102

Working
Dataset
212

Exectuion
Results
214
$DP_1 - \{P_{c11,}\ P_{c21}\}$
$DP_2 - \{P_{c12,}\ P_{c22}\}$
$DP_3 - \{P_{c13,}\ P_{c23}\}$
⋮

Data Point Sampling Module
204

Distribute Points into Probability Interval Groups

Group
230A

Group
230B

Group
230C

...

Sample Points from Probability Interval Groups
and Label as Belonging to 2nd Class

Sampled Points Labeled
As Belonging to 2nd Class

Points from
1st Class

Classification Model Training
Module
206

Labeled Training
Dataset
104

Held-Out
Dataset
218

Trained
Classification
Model
222B

Train

Classification Model
222B

Dataset of
Sampled Points
220

Performance Measurement
Module
208

FIG. 2C

Evaluate → Trained Classification Model 224A

Performance Measurement Module 208

Held-Out Dataset 218

Evaluate → Trained Classification Model 224B

AI System 100 Performance Measurement 230A

FIG. 2D

300

Start

Execute AI System to Perform Task on Working Dataset to Obtain Output Probabilities that Data Points Belong to 1$^{st}$ Class — 302

Divide, Using Output Probabilities, the Data Points Among Probability Interval Groups — 304

Sample 1$^{st}$ Set of Data Points from Probability Interval Groups — 306

A

FIG. 3A

FIG. 3B

FIG. 4

FIG. 5

FIG. 5
CONTINUED

FIG. 6

FIG 7

FIG. 7
CONTINUED

g — Plot of Proportion of positive instances versus SUDO$_{AUC}$, $\rho = -0.95$

h — Plot of Median survival time (years) versus SUDO$_{AUC}$, $\rho = 0.97$

FIG. 7
CONTINUED

FIG. 8

Europäisches
Patentamt

European
Patent Office

Office européen
des brevets

**EUROPEAN SEARCH REPORT**

Application Number

EP 24 20 5521

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/146774 A1 (GOOGLE LLC [US]) 3 August 2023 (2023-08-03) * paragraph [0001] - paragraph [0064] * ----- | 1-15 | INV. G06N3/0464 G06N3/084 G06N3/0895 |
| A | US 2022/391724 A1 (YOON JINSUNG [US] ET AL) 8 December 2022 (2022-12-08) * paragraph [0001] - paragraph [0095] * ----- | 1-15 | G06N3/09 G06N20/10 |
| A | US 2023/162049 A1 (HALL JONATHAN MICHAEL MACGILLIVRAY [AU] ET AL) 25 May 2023 (2023-05-25) * paragraph [0001] - paragraph [0363] * ----- | 1-15 | |

TECHNICAL FIELDS
SEARCHED      (IPC)

G06N

The present search report has been drawn up for all claims

| Place of search | Date of completion of the search | Examiner |
|---|---|---|
| The Hague | 18 February 2025 | Keresztury, Bence |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 4 538 932 A1**

## ANNEX TO THE EUROPEAN SEARCH REPORT
## ON EUROPEAN PATENT APPLICATION NO.

EP 24 20 5521

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2025

| Patent document cited in search report | | | Publication date | Patent family member(s) | | | Publication date |
|---|---|---|---|---|---|---|---|
| WO 2023146774 | A1 | | 03-08-2023 | NONE | | | |
| US 2022391724 | A1 | | 08-12-2022 | CN | 117396900 | A | 12-01-2024 |
| | | | | EP | 4348527 | A1 | 10-04-2024 |
| | | | | US | 2022391724 | A1 | 08-12-2022 |
| | | | | WO | 2022251462 | A1 | 01-12-2022 |
| US 2023162049 | A1 | | 25-05-2023 | AU | 2021247413 | A1 | 01-12-2022 |
| | | | | CN | 115699208 | A | 03-02-2023 |
| | | | | EP | 4128273 | A1 | 08-02-2023 |
| | | | | JP | 2023521648 | A | 25-05-2023 |
| | | | | US | 2023162049 | A1 | 25-05-2023 |
| | | | | WO | 2021195688 | A1 | 07-10-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63543173

**Non-patent literature cited in the description**

- **ESTEVA, A. et al.** Dermatologist-level classification of skin cancer with deep neural networks. *Nature*, 2017, vol. 542, 115-118
- **TSCHANDL, P.** ; **ROSENDAHL, C.** ; **KITTLER, H.** The ham10000 dataset, a large collection of multi-source dermatoscopic images of common pigmented skin lesions. *Sci. Data*, 2018, vol. 5, 1-9
- **DANESHJOU, R. et al.** Disparities in dermatology ai performance on a diverse, curated clinical image set.. *Sci. Adv.*, 2022, vol. 8, 6147
- **KOH, PANG WEI et al.** Wilds: A benchmark of in-the-wild distribution shifts.. *International conference on machine learning. PMLR*, 2021